# EUROPEAN PATENT SPECIFICATION

(11) **EP 2 766 633 B1**
(45) Date of publication and mention of the grant of the patent: **17.10.2018**
(21) Application number: 13760343.7
(22) Date of filing: 12.03.2013
(51) Int. Cl.: F16F 15/30, F16F 15/315, H02K 7/02

(54) **ELECTROMECHANICAL FLYWHEEL WITH SAFETY FEATURES**
ELEKTROMECHANISCHES SCHWUNGRAD MIT SICHERHEITSMERKMALEN
VOLANT ÉLECTROMÉCANIQUE DOTÉ DE CARACTÉRISTIQUES DE SÉCURITÉ

(30) Priority: 15.03.2012 US 201261611307 P
(43) Date of publication of application: 20.08.2014
(73) Proprietor: Rotonix China Co., Limited, BDA, Beijing, Beijing 100176 (CN)
(72) Inventor: KALEV, Claude, Michael, Newbury Park, CA 91320 (US); ROSEN, Robert, A., Agoura Hills, CA 91301 (US)
(74) Representative: Davies, Philip
(86) International application number: PCT/US2013/030620
(87) International publication number: WO 2013/138390

(56) References cited:
- EP-B1- 0 855 100
- WO-A1-95/07193
- WO-A1-96/24981
- WO-A2-96/05646
- GB-A- 2 305 992
- JP-A- 2003 088 040
- US-A- 3 662 619
- US-A- 3 859 868
- US-A1- 2003 000 336
- US-A1- 2005 040 776
- US-A1- 2009 134 705

## Description

### PRIORITY CLAIM / RELATED APPLICATIONS

This application claims the benefit of U.S. Prov. Pat. App. No. 61/611,307 filed March 15, 2012 and entitled ELECTROMECHANICAL FLYWHEEL WITH SAFETY FEATURES.

### BACKGROUND OF THE INVENTION

Known flywheels store kinetic energy, that is, the energy of motion. When called upon to release this energy, the flywheel slows as kinetic energy is depleted. Flywheels driving and driven by electric machines are also know. For decades, such electromechanical machines have been built and have achieved varying degrees of operational success. Widespread application has, however, eluded flywheel manufacturers as even the most advanced commercial machines suffer from significant operational limitations while exceeding the cost of better performing alternatives. Despite persistent efforts by a small flywheel manufacturing industry, modern electromechanical flywheels have found only narrow applications in a few niche markets and presently make no significant contribution to the developed world's energy supply.

### Field of Invention

This invention relates to the electromechanical arts. In particular, evacuation, safety, heat transfer, and support functions of an electromechanical flywheel are enabled, at least in part, by a multi-wall containment system.

Examples of known energy storage flywheels are disclosed in documents US 2005/040776 A1, US 2009/134705 A1, GB 2 305 992 A, US 2003/000336 A1, US 3 859 868 A and US 3 662 619 A.

### Discussion of the Related Art

Electromechanical flywheels include machines operating under atmospheric conditions and machines operating under evacuated conditions. While machines operating in evacuated environments have benefitted from high speed operation, they have also been limited by available techniques to manage magnetic part temperatures and safety containment.

### SUMMARY OF THE INVENTION

The present invention provides an electromechanical flywheel according to claim 1, the preamble of which is disclosed in document US 3 859 868 A, which represents the closest prior art.

In an embodiment, an electromechanical flywheel comprises a core assembly including a motor-generator stator; a motor generator rotor surrounding the stator; the stator defining an axis of rotation, having a field coil that encircles the axis of rotation, and having an armature coil that does not encircle the axis of rotation; a flywheel mass encircles the rotor and is coupled to the rotor for rotation with the rotor; and, an evacuable housing that encloses the flywheel mass. The rotor is supported by first and second spaced apart suspension assemblies; the first suspension assembly includes a first electromagnetic bearing for applying centering and levitating forces to the rotor; and, the second suspension assembly includes a second electromagnetic bearing for applying centering forces to the rotor.

In an embodiment, an electromechanical flywheel containment system comprises: inner and outer enclosures defining respective inner and outer walls; a primary pressure wall and/or projectile shield between the walls of the inner and outer enclosures; an energy exchange block including a core assembly including a motor-generator stator and a stator support and a spinning assembly including a motor-generator rotor, a flywheel mass and a hub; the motor-generator rotor surrounding the motor-generator stator; the inner enclosure enveloping the energy exchange block; the outer enclosure enveloping the inner enclosure; a first annular flow passage for transporting a fluid coolant, the first annular flow passage outer diameter bounded by a wall of the outer enclosure; and, wherein a containment system fluid circuit for transporting coolant includes the first annular flow passage and a stator support flow passage.

In an embodiment, the electromechanical flywheel containment system above further comprises: the inner and outer walls of the inner and outer enclosures concentrically arranged; the primary pressure wall encircling the inner wall; a shroud encircling the primary pressure wall; the shroud encircled by the outer wall of the outer enclosure; the first annular flow passage inner diameter bounded by the shroud; a second annular flow passage bounded by the shroud and the primary pressure wall; and, wherein the containment system fluid circuit for transporting coolant includes the second annular flow passage.

In yet another embodiment, an electromechanical flywheel containment system comprises: inner and outer enclosures defining respective inner and outer walls: a primary pressure wall between the inner and outer walls; an annular flow passage for transporting a fluid coolant; the annular flow passage inner diameter bounded by the primary pressure wall; a motor-generator stator hanging from the inner enclosure; a rotating assembly including a motor-generator rotor, defining an axis of rotation, and encircling a motor-generator stator and defining an axis of rotation; a flywheel mass surrounding and coupled to the rotor; and, wherein a field winding of the stator encircles the axis of rotation and an armature winding of the stator does not encircle the axis of rotation.

In some embodiments an electromechanical flywheel safety system comprises: inner and outer enclosures; a flywheel mass; the inner enclosure enveloping the flywheel mass; the outer enclosure enveloping the inner enclosure; at least a first portion of the flywheel mass designed to fail at a first flywheel mass rotational speed; at least a second portion of the flywheel mass designed to fail at a second flywheel mass rotational speed; and, the first flywheel mass rotational speed being less than the second flywheel mass rotational speed such that in a flywheel mass overspeed failure event, the first portion of the flywheel mass fails before the second portion of the flywheel mass fails. Another embodiment also includes an inner enclosure design operative to resist a breach resulting from failure of the first portion of the flywheel mass that is also operative to resist a breach in the event the second portion of the flywheel mass fails thereafter.

In some embodiments an electromechanical flywheel safety system comprises: inner and outer enclosures; a flywheel mass; the inner enclosure enveloping the flywheel mass; the outer enclosure enveloping the inner enclosure; the flywheel mass including an inner layer beneath an outer layer, the inner and outer layers encircling a flywheel mass axis of rotation; the outer layer designed to fail at a first flywheel mass rotational speed and the inner layer designed to fail at a second flywheel mass rotational speed; and, the first flywheel mass rotational speed being less than the second flywheel mass rotational speed such that in a flywheel mass overspeed failure event, the outer layer fails before the inner layer fails. Various embodiments also include one or more of: wherein the flywheel mass inner layer is designed to store an amount of kinetic energy that is substantially equal to the amount of kinetic energy stored by the outer layer; the inner layer is circumferentially enclosed by the outer layer; a pivot type bearing between the inner and outer enclosures and a rotational centerline of the flywheel mass passing through the pivot bearing; one or more resilient bearings in an annulus defined by the inner and outer enclosures, the resilient bearings spaced apart from the pivot bearing and the bearings chosen to limit motion transfers between the first and the second enclosures; at least one of the bearings incorporates a visco-elastic material; a vacuum enclosure within the inner enclosure, the inner enclosure being a metallic primary pressure enclosure designed to contain the products of a flywheel mass overspeed failure and the vacuum enclosure being a metallic enclosure and having a relatively thin side wall as compared with the thickness of a primary pressure enclosure side wall; a metallic vacuum enclosure within the inner enclosure; and, the inner enclosure including a carbon fiber composite sidewall encircling the vacuum enclosure; a metallic vacuum enclosure within the inner enclosure, an energy exchange block including a core assembly including a motor-generator stator having plural stator electrical leads and a stator support and a spinning assembly including a motor-generator rotor and the flywheel mass and the motor-generator rotor encircling the motor-generator stator, respective spaced apart lids for the inner and outer enclosures, a first feed through in the inner enclosure lid and a second feed through in the outer enclosure lid, a separable stator lead coupling located between the enclosure lids, the stator lead coupling providing an electric current path between a stator electrical lead and a coupling lead, the stator lead extending between a stator winding and the stator lead coupling, the stator lead passing through the first feed through, the coupling lead extending between the stator lead coupling and a location outside the outer enclosure, the coupling lead passing through the second feed through, and relative rotation of the inner and outer lids operative to separate the separable stator lead coupling; a lid centerline passing through the centers of the enclosure lids, an angular offset between the first and second feed throughs, the offset operative to extend the distance between the first and second feed throughs, the offset operative to orient the stator lead coupling and adjacent portions of the stator lead and coupling lead at an angle with respect to a line parallel to the lid centerline, and as compared with no angular offset, the offset operative to reduce the relative rotation of the inner and outer enclosures required to separate the separable stator lead coupling; a plurality of the stator lead couplings and respective stator leads and coupling leads, each of the stator leads passing through the first feed through, each of the coupling leads passing through the second feed through, each stator lead and coupling lead combination having a length that is different from the other one or more stator lead and coupling lead combinations, and the differing lengths operative to provide a staggered sequence of stator lead coupling separations in response to relative rotation of the inner and outer lids.

In some embodiments, an electromechanical flywheel safety system comprises first, second, and third nested enclosures; an energy exchange block including a core assembly including a motor-generator stator and a stator support and a spinning assembly including a motor-generator rotor and a flywheel mass; the motor-generator rotor surrounding the motor-generator stator; the third enclosure enveloping the energy exchange block, the second enclosure enveloping the third enclosure, and the first enclosure enveloping the second enclosure; a pivot type bearing between the first and second enclosures, a center of rotation of the spinning assembly passing through a moving contact point of the pivot bearing; one or more resilient bearings in an annulus defined by the first and second enclosures, the resilient bearings spaced apart from the pivot bearing; and, the bearings being chosen to limit motion transfers between the first and the second enclosures. Various embodiments include wherein the one or more of the resilient bearings incorporates a visco-elastic material.

In some embodiments, steps of an electromechanical flywheel safety system method include: reducing electromagnetic bearing forces required to maintain a levitated motor-generator rotor in position by providing a motor-generator rotor for magnetic levitation by electromagnetic bearings, providing a primary enclosure enveloping a secondary enclosure enveloping the rotor, supporting the weight of the secondary enclosure with a pivot bearing located between the enclosures, and limiting motion transfers between the enclosures using viscoelastic bearings located in an annulus between the enclosures, the bearings being spaced apart from the pivot bearing.

And, in some embodiments, steps of an electromechanical flywheel safety system method include limiting the power associated with a flywheel mass failure by designing the flywheel mass to undergo structural failure in stages.

### BRIEF DESCRIPTION OF THE DRAWINGS

The present invention is described with reference to the accompanying figures. These figures, incorporated herein and forming part of the specification, illustrate the present invention and, together with the description, further serve to explain the principles of the invention and to enable a person skilled in the relevant art to make and use the invention.
Figure 1 shows a block diagram of an electromechanical flywheel machine in accordance with the present invention.
Figure 2 shows selected functions and equipment of the electromechanical flywheel machine of Figure 1.
Figure 3A shows a first embodiment of the electromechanical flywheel machine of Figure 1.
Figure 3B shows a spinning assembly for use with the electromechanical flywheel machine of Figure 1.
Figure 3C shows cross-sectional view y-y of the spinning assembly of Figure 3B.
Figure 4 shows a second embodiment of the electromechanical flywheel machine of Figure 1.
Figure 5A shows rotor poles of an electromechanical flywheel machine of Figure 1.
Figure 5B shows rotor poles and a stator of an electromechanical flywheel machine of Figure 1.
Figure 6 shows a lower bearing assembly and some related parts of an electromechanical flywheel machine of Figure 1.
Figure 7 shows an upper bearing assembly and some related parts of an electromechanical flywheel machine of Figure 1.
Figure 8 shows a third embodiment of the electromechanical flywheel machine of Figure 1.
Figures 9A-C show containment systems of the electromechanical flywheel machine of Figure 1.
Figures 10A-D show mechanical isolation features of the electromechanical flywheel machine of Figure 1.
Figure 11A shows energy dissipation features of the electromechanical flywheel machine of Figure 1.
Figures 11B-D show stator lead separation features of the electromechanical flywheel machine of Figure 1.
Figures 12A-D show stator lead cutter features of the electromechanical flywheel machine of Figure 1.

### DETAILED DESCRIPTION OF THE PREFERRED EMBODIMENTS

The disclosure provided in the following pages describes examples of some embodiments of the invention. The designs, figures, and descriptions are nonlimiting examples of certain embodiments of the invention. For example, other embodiments of the disclosed device may or may not include the features described herein. Moreover, disclosed advantages and benefits may apply to only certain embodiments of the invention and should not be used to limit the disclosed inventions.

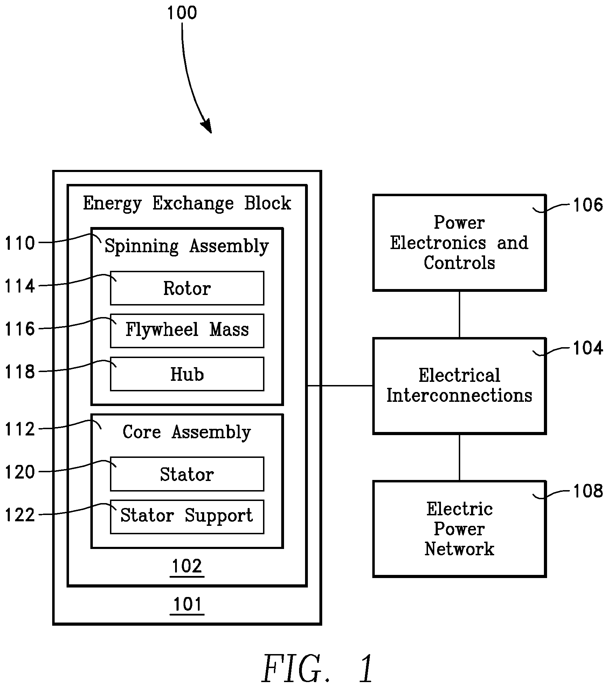

Figure 1 shows an electromechanical flywheel machine 100. Electrical interconnections 104 electrically couple an energy exchange block 102, power electronics and controls 106, and an electric power network 108.

As used herein, unless otherwise stated, the term coupled refers to a direct or indirect connection such as A connected directly to B and C connected indirectly to E via D.

The energy exchange block 102 includes a spinning assembly 110 and a core assembly 112. A containment system 101 provides one or more containment features discussed below. The spinning assembly includes a motor-generator rotor 114, a flywheel mass 116, and a hub 118. The core assembly includes a motor-generator stator 120 and a motor-generator stator support 122. In various embodiments, the spinning assembly is, as shown here, shaft-less.

Electrical interconnections 104 include any of electrical conductor connections, electrical interface devices, electrical transducers, and the like. Power electronics and controls 106 include any of silicon and/or semiconductor devices, analog and digital processors, and related interfaces including human interfaces. The electric power network 108 is 1) a source of electric power to the energy exchange block 102 in some embodiments, 2) a user of electric power from the energy exchange block in some embodiments, and 3) both a source and a user of electric power to and from the energy exchange block in some embodiments.

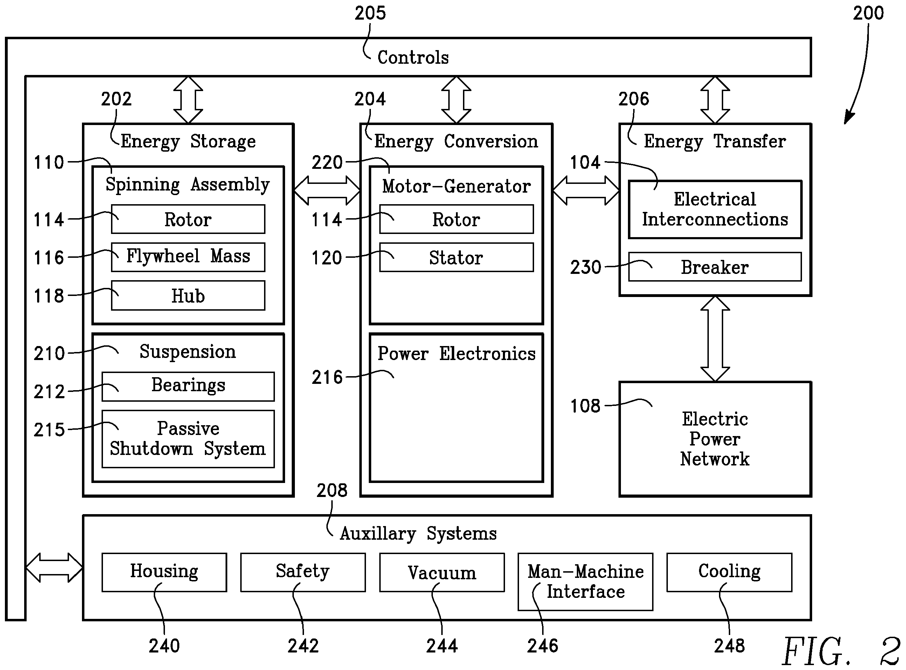

Figure 2 shows selected electromechanical flywheel machine functions and equipment 200. Energy storage 202 is central to flywheel operation. In electromechanical flywheels, energy storage and energy conversion 204 provide a means for converting kinetic energy to electrical power and/or converting electrical power to kinetic energy. Energy transfer 206 provides for electric power transfers between energy conversion equipment 220, 216 and an electric power network 108. In various embodiments, an electrical switch such a circuit breaker 230 provides for connecting and disconnecting conductors enabling power transfer. In various embodiments, other electromechanical flywheel machine functions include any of several auxiliary support functions 208 described below.

Energy storage 202 utilizes the spinning assembly 110. In various embodiments, a suspension system 210 supports the spinning assembly. Suspension equipment includes bearings or their equivalents 212 and in some embodiments a passive shutdown system 215 supports the spinning assembly in selected operating regimes such as shutdown.

Energy conversion 204 utilizes a means for converting kinetic energy into electrical power such as a generator or a motor-generator. A motor-generator 220 is shown. The motor-generator includes the rotor 114 and a stator 120 and provides a means for rotatably driving the spinning assembly 110 and for being rotatably driven by the spinning assembly. In various embodiments, power electronics 216 enable manipulation of electrical waveforms emanating from the motor-generator and/or the electric power network 108. For example, in various embodiments, power electronics provide for frequency conversion in an AC to AC converter having an intermediate DC bus and power electronics provide for variable speed drive functions such as accelerating the flywheel rotor.

In various embodiments, auxiliary support functions 208 are carried out by auxiliary support equipment described more fully below. Auxiliary support functions include housing 240, safety 242, vacuum 244, cooling 248, and man-machine interface 246.

A control function 205 provides for one or more of monitoring, assessment, command, and control of other electromechanical flywheel functions. In particular, the control function enables electromechanical flywheel operation via supervision and/or control of one or more of the energy storage 202, energy conversion 204, energy transfer 206, and auxiliary support 208 functions.

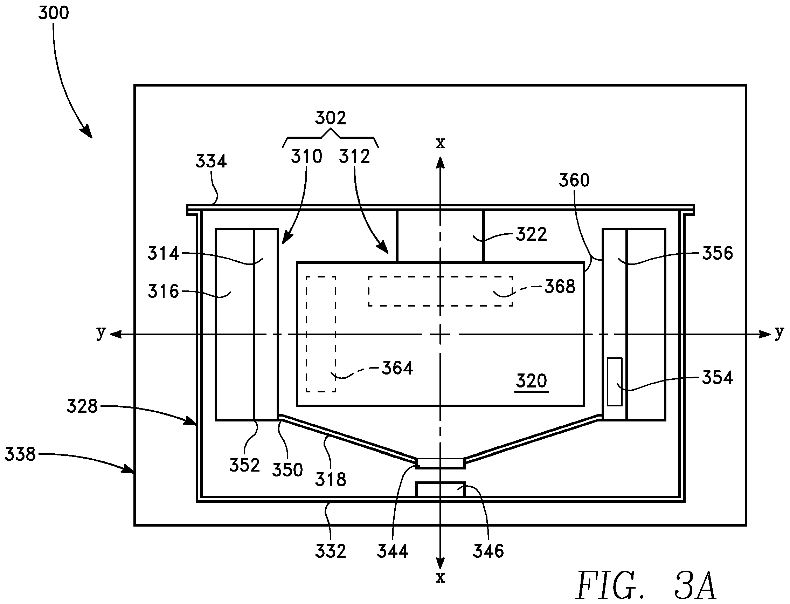

Figure 3A shows a first electromechanical flywheel portion 300A. An energy exchange block 302 is enclosed by an inner housing 328 which is in turn enclosed by an optional outer housing 338.

The energy exchange block 302 includes a spinning assembly 310 and a core assembly 312. Included in the spinning assembly is a motor-generator rotor 314, a flywheel mass encircling and coupled to the rotor 316, a hub 318 coupled to the flywheel mass, and a moving suspension element 344. In some embodiments, a sleeve such as a non-magnetic sleeve is interposed between the rotor and the flywheel mass for, *inter alia,* backing the rotor and providing support to the rotor. The rotor, flywheel mass, hub, and moving suspension element are for rotation in synchrony about an axis x-x and in various embodiments the hub is attached to one or both of the rotor 350 and the flywheel mass 352. Opposite the moving suspension element is a stationery suspension element 346 supported via a first wall of the inner housing 332. Included in the core assembly 312 are a stator 320 and a stator support 322. In some embodiments the stator support is coupled to a wall of the inner housing such as a second wall of the inner housing 334.

Encircling the motor-generator stator 320 is the motor-generator rotor 314. In various embodiments, the rotor 314 includes magnetic 354 and nonmagnetic 356 portions and, in some embodiments, the nonmagnetic portion is or includes blocking or matrix material supporting the magnetic portions. In an embodiment, the magnetic rotor portions are laminated structures.

In various embodiments the stator 320 includes a magnetic structure with one or more interengaged coils having electrically conductive windings capable of carrying variable currents and thereby varying the magnetic flux of the magnetic structure. In some embodiments, a first stator coil 364 encircles an imaginary y-y axis that is about perpendicular to the x-x axis. And, in some embodiments, a second stator coil 368 encircles the x-x axis. In an embodiment, a plurality of first stator coils encircle respective imaginary y-y axes and one or more second stator coils encircle the x-x axis, the first stator coils being armature coils and the second stator coils being field coils.

And, in an embodiment, the motor-generator 360 is a homopolar device with the illustrated inside-out arrangement (rotor encircles stator) wherein a) a rotatable rotor similar to rotor 314 includes coil-less, laminated magnetic structures, b) wherein a stationery central stator similar to stator 320 includes laminated magnetic structures with coils for creating a magnetic flux in the magnetic structures and c) the rotor encircles the stator.

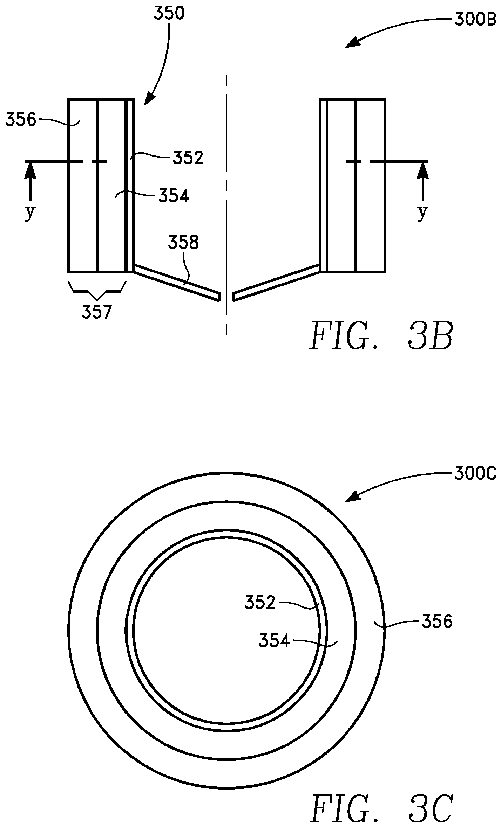

Figure 3B shows a spinning assembly for use with the electromechanical flywheel of Figure 1 300B. Spinning assembly parts include a flywheel mass 357, a motor-generator rotor 352, and a hub 358. In various embodiments, the flywheel mass includes one or more layers, each layer being made from one or more materials. Materials are selected to provide material properties suited to one or more of rotor speed, environment including temperature, lifetime, strength, durability, reliability, limited outgassing, and other criteria bearing on operability, reliability, and cost. Generally, suitable materials include strong composites such as fiber reinforced polymers, for example fiberglass and carbon reinforced polymers including fiberglass and carbon reinforced epoxies in one or more types or grades.

As persons of ordinary skill in the art will appreciate, flywheel mass failure presents a safety related risk. In particular, motor-generator rotor speeds may in unusual circumstances create flywheel mass stresses, for example hoop stress, which cause the flywheel mass to fail. The energy released during such a failure must be dissipated and products of the failure must be contained.

Energy dissipation means can be designed to dissipate a particular quantity of energy released over a particular time period. The power rating of an energy dissipation means can be reduced by reducing the failure energy released per unit time and the power capacity rating of an energy dissipation means can be reduced by reducing the total failure energy release.

In some embodiments, the quantity of failure energy and the rate of failure energy released is reduced through the use a flywheel mass having at least first and second portions wherein the first portion is designed to fail before the second portion fails in a failure event such as an overspeed event. Flywheel mass failure may be due to conditions exceeding flywheel mass physical properties or initiated by failure mechanisms such as intentionally weakened flywheel mass portions and/or application of extraordinary force such as the use of explosive charges, heating, cutting, impacting, and the like.

In some embodiments, the flywheel mass portions are flywheel mass layers. For example, a two portion flywheel mass having a first portion as a first layer and a second portion as a second layer can be used.

As shown in Figures 3B and 3C, the flywheel mass includes two layers, an inner layer 354 adjacent to the motor-generator rotor and an outer layer 356. In an overspeed failure scenario, failure of the outer layer is designed to occur before failure of the inner later. This preferential failure of the outer layer is in various embodiments implemented through the use of suitable: materials including fibers and matrix materials, layer thicknesses, manufacturing methods, interface materials between the first and second layers, impact devices, explosive device(s), and vacuum enclosure pressurization.

When the outer layer fails, tip speed is reduced (Tip Speed = radius x angular velocity or Tip Speed = r x ω) initially because the outer layer, that is the largest diameter portion of the flywheel mass, is lost. Tip speed is further reduced thereafter by energy dissipating processes including frictional processes such as windage tending to slow the flywheel mass. In various embodiments, flywheel overspeed failures shut-off the supply of electric power to the electromechanical flywheel motor-generator and thus the means to increase or maintain flywheel mass speed after flywheel mass failure.

Preservation of an inner portion of the flywheel mass while sacrificing an outer portion of the flywheel mass during an overspeed event reduces the total energy released when a flywheel mass fails due to overspeed It also reduces the rate at which energy is released during a flywheel mass failure. As a result, the rating of safety devices designed to dissipate a flywheel failure energy release can be reduced.

In an embodiment, the flywheel mass inner and outer layers 354, 356 are designed to store equal percentages (50/50) of kinetic energy or nearly equal percentages (50/50 +/- 20 %) of kinetic energy. In this embodiment, the power rating of the energy dissipation can be reduced to about half of what would otherwise be required.

In an embodiment, the flywheel mass inner layer 354 is made from a material having strength S1 while the flywheel mass outer layer 356 is made from a material having strength S2. S1 and S2 are selected such that the outer layer will fail at a first motor-generator overspeed while the inner layer will fail at a second, higher motor-generator overspeed. The table below illustrates exemplary material selections:

| | S1/inner layer material | S2/outer layer material |
|---|---|---|
| Material Combination 1 | fiberglass composite | carbon fiber composite |
| Material Combination 2 | carbon fiber composite | carbon fiber composite |
| Material Combination 3 | high strength carbon fiber composite | low strength carbon fiber composite |
| Material Combination 4 | co-mingled fiberglass and carbon fiber composite or carbon fiber composite | co-mingled fiberglass and carbon fiber composite or carbon fiber composite |
| Material Combination 5 | a material or combination of materials selected from those listed for combinations 1-4 above | no outer layer |

Indicative ultimate strengths in SI units (MPa) at zero degrees include fiberglass materials in the range of 300-400, low strength carbon fiber materials in the range of 1000-1300 and high strength carbon fiber materials in the range of 1300-1600.

In an embodiment, the intermediate and outer layers include carbon fiber materials and the inner layer includes fiberglass. In another embodiment, all three layers are substantially made from carbon fiber materials. In various embodiments, one or more layers are pre-stressed such as by winding fibers under tension to form substantially cylindrical shell(s) with inherent compressive stress.

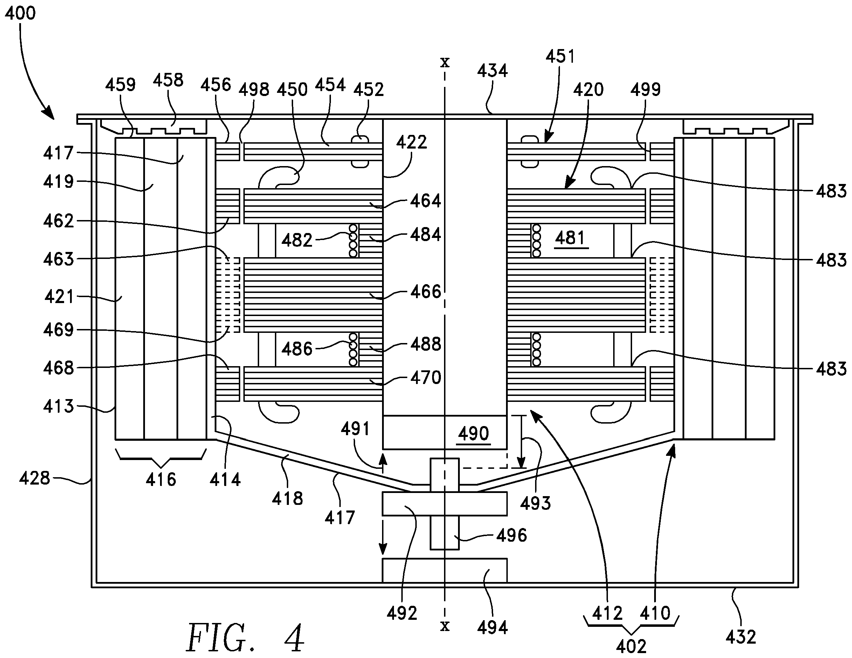

Figure 4 shows a second electromechanical flywheel portion 400. An energy exchange block 402 is enclosed by an inner housing 428 which is enclosed, or partially enclosed, in some embodiments, by an outer housing (not shown).

The energy exchange block 402 includes a spinning assembly 410 and a core assembly 412. Included in the spinning assembly are a motor-generator rotor 414, a flywheel mass encircling and coupled to the rotor 416, a hub coupled to the flywheel mass 418, a support pin for supporting the hub 496, and a moving suspension assembly for supporting the hub 492. Some embodiments include a sleeve such as a non-magnetic sleeve between the rotor and the flywheel mass.

In various embodiments, the flywheel mass 416 includes layers of different materials such as fiberglass in one or more types or grades and carbon fiber in one or more types or grades. U.S. Pat. No. 6175172 entitled HUB AND CYLINDER DESIGN FOR FLYWHEEL SYSTEM FOR MOBILE ENERGY STORAGE is incorporated by reference herein in its entirety and for all purposes including flywheel mass construction techniques and materials.

As shown, the flywheel mass includes three layers with a first layer 417 adjacent to the rotor, an intermediate layer 419, and an outer layer 421. In an embodiment, the intermediate and outer layers include carbon fiber materials and the inner layer includes fiberglass. In another embodiment, all three layers are substantially made from carbon fiber materials. In various embodiments, one or more layers are pre-stressed such as by winding fibers under tension to form substantially cylindrical shell(s) with inherent compressive stress.

The support pin, moving suspension assembly and hub are concentrically arranged and are for rotation in synchrony about an axis x-x. As seen, the support pin 496 is located in a gap 491 between upper and lower bearing carriers 490, 494. Extending from the stator support 422 is an upper bearing carrier and supported from a first wall of the housing 432 is a lower bearing carrier. In an embodiment, elongation of the upper bearing carrier along the x-x axis 493 serves to rotatably restrain the support pin between the upper and lower bearing carriers. In this sense, the upper and lower bearing carriers provide a means to "capture" the spinning assembly 410 via the support pin and are useful for functions including passive shutdown. In various embodiments, the lower bearing carrier and the moving suspension assembly incorporate a first electromagnetic bearing.

A second electromagnetic bearing 451 is spaced apart from the upper and lower bearing carriers 490, 494. The second electromagnetic bearing includes a fixed bearing stator 454 supported by the stator support 422 and electrical windings 452 for magnetizing the stator and a geometrically opposing rotor 456 coupled to the rotor. As shown, the mating faces of the electromagnet 498, 499 are parallel to the x-x axis such that electromagnetic bearing forces are perpendicular to the x-x axis. In other embodiments, angled electromagnetic bearing faces such as those described infra provide electromagnetic bearing force components along an axis parallel to the x-x axis and along an axis perpendicular to the x-x axis.

Included in the core assembly 412 is a stator 420 and a stator support 422 coupled to a second wall of the inner housing 434. Encircling the motor-generator stator is the motor-generator rotor 414. In various embodiments, the rotor includes magnetic and nonmagnetic portions (e.g., see 354, 356 of Figure 3) and, in some embodiments, the nonmagnetic portion is or includes blocking or matrix material supporting the magnetic portions. In an embodiment, the magnetic rotor portions are laminated structures.

In various embodiments, the stator 420 includes a magnetic structure with one or more interengaged coils having electrically conductive windings capable of carrying variable currents and thereby varying the magnetic flux of the magnetic structure.

A typical homopolar stator includes at least two peripheral rims and one smaller intermediate rim. The rims include a magnetic material such as iron and in various embodiments the rims are laminated structures with each laminate having a substantially annular shape.

As shown, the stator 420 includes three large diameter rims 464, 466, 470 and two smaller diameter rims 484, 488 such that substantially annular or somewhat doughnut shaped pockets 481 are formed between the large diameter and the small diameter rims. It is in these pockets that coils encircling the rotational axis x-x are placed to form field windings 482, 486. In addition to the field coil(s), the stator also includes armature coils.

Armature coils 450 are interengaged with slots 483 in the periphery of the large rims 464, 466, 470 such that each armature coil will encircle an imaginary axis y-y that is substantially perpendicular to the axis of rotation x-x (see Figure 3).

For each stator rim, there is a plurality of mating rotor poles. As can be seen, the peripheral stator rims 464, 470 have axially spaced (x-x) mating rotor pole 462, 468 (shown in solid lines) and the central stator rim 466 has axially adjacent mating rotor poles 463, 469 (shown in broken lines). Rotor poles for adjacent rims (e.g., 462, 463) are not only axially spaced (x-x), but they are also radially spaced such that a rotor pole for one rim is radially spaced by 90 electrical degrees from the closest rotor pole mating with an adjacent rim.

In various embodiments, internal vacuum pumps such as molecular drag pumps provide for moving molecules away from the flywheel mass 416 and especially away from the flywheel mass periphery where the highest speeds are achieved.

In an embodiment, a first vacuum pump is formed by a stationery labyrinth like ring 458 supported from the housing wall 434 which is closely spaced with respect to a vacuum pump surface of the flywheel mass 459. In various embodiments grooves in the labyrinth ring provide for a pumping action in concert with the moving flywheel surface. In some embodiments, the groove is a spiral having a cross-sectional area that generally decreases along a forward flow path. And, in some embodiments, a second vacuum pump is formed by a labyrinth similar to the one described above and fixed to peripheral stator parts (such as the large diameter stator rings 454, 464, 466, 470, not shown for clarity) or fixed to geometrically opposed rotor poles (456, 462, 463, 469, 468).

In an embodiment, a supply region and an exhaust region are included within the evacuable housing. The supply region has a boundary defined at least in part by portions of a housing 428, a hub exterior surface 417, and a flywheel mass periphery 413. The exhaust region has a boundary defined at least in part by portions of the vacuum barrier housing and the core assembly 412. A first drag pump is interposed between a flywheel mass surface 459 and the vacuum barrier housing wall 434 and a second drag pump is interposed between at least one stator ring 466 and the rotor 414.

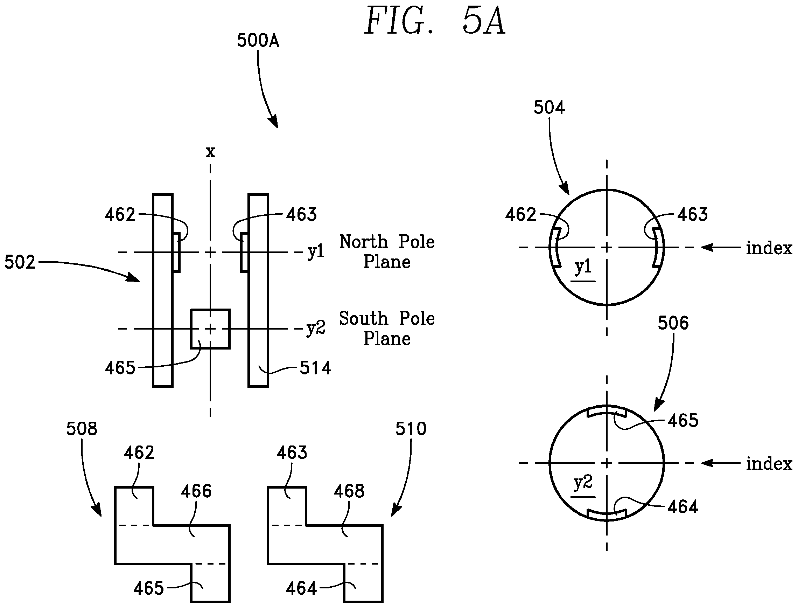

Figure 5A shows a radially staggered arrangement of rotor poles in adjacent pole planes for a 2+2 pole single stage homopolar machine 500A. Referring to rotor cross section 502 and rotor 514, a first pole 462 is located in a first pole plane Y1 and an opposed pole 463 in located in the same plane. In a similarly clocked adjacent pole plane Y2, an adjacent plane pole 465 is between the Y1 plane poles. Not shown in this cross section is the second pole in the Y2 plane 464.

The plane views 504, 506 of the pole planes Y1, Y2 show the poles in each pole plane 462, 463 and 464, 465 are separated by a 90° geometric angle. In this 4 pole embodiment, the poles are similarly separated by 90 electrical degrees.

In various embodiments, a magnetic path extends between adjacent staggered poles. For example, as shown in the pole assemblies 508, 510, magnetic path parts 466, 468 extend between pole pairs 462, 463 and 463, 464. As shown here, two continuous magnetic paths are formed in a 4 pole machine rotor by magnetic path parts 462-466-465 and 463-468-464. In some embodiments, each magnetic path part assembly 462-466-465 and 463-468-464 is "Z" shaped with the central members 466, 468 meeting adjoining members 462, 465 and 463, 464 at substantially right angles. Among other things, this structure preserves the capacity of the magnetic path.

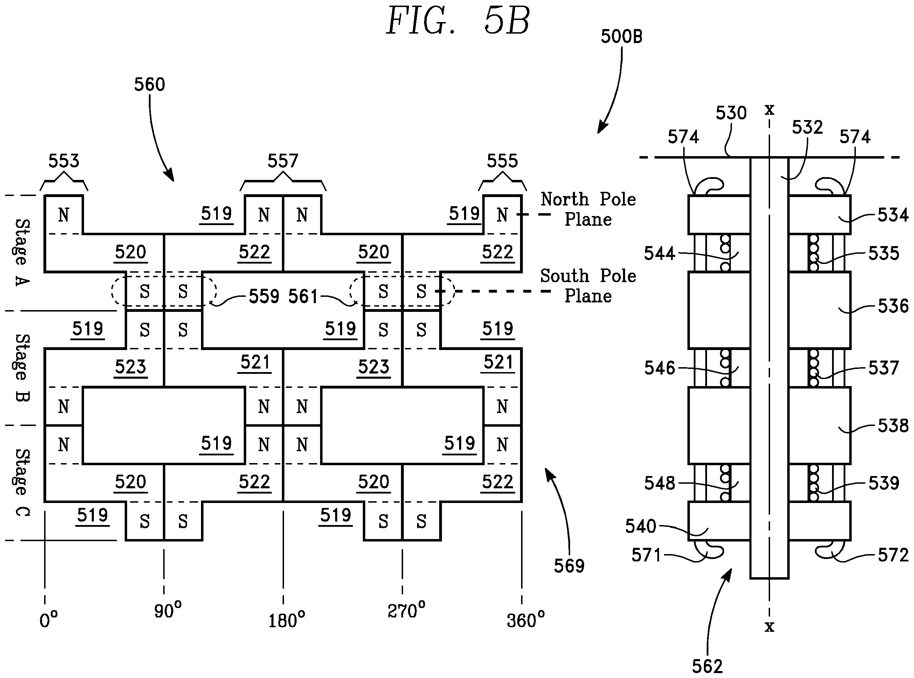

Figure 5B shows a rotor and a stator for a three stage machine, each stage having four poles 500B. Here, a view of rotor magnetic path part assemblies 560 is shown as if the normally cylindrical rotor structure is "unrolled" such that a planar surface is presented. The magnetic path part assemblies 520, 522, 523, 521 are arranged to create a lattice 569 with spaces between the parts 519, the spaces being filled, in various embodiments, with non-magnetic material(s).

The lattice 569 is constructed such that a plurality of stages A, B, C is formed, each stage having 4 poles. For example, stage A has a North plane with a first full pole 557 and a second pole consisting of two half-poles 553, 555. Stage A also has a South plane with two full poles 559, 560. The North and South planes of Stage A therefore have a total of 4 complete poles.

Each stage includes four magnetic path part assemblies or rotor lattice parts. For example, Stage A includes magnetic path part assemblies 520, 522, 520, and 522; Stage B includes magnetic path part assemblies 523, 521, 523, and 521; and Stage C, like Stage A, includes magnetic path part assemblies 520, 522, 520 and 522. Notably, in various embodiments, the path part assemblies differ only in their orientation; for example, assembly 520 differs from assembly 522 by an 180° rotation about an axis parallel to the x-x axis while assembly 520 differs from assembly 523 by an 180° rotation about an axis perpendicular to the x-x axis. Assembly 522 differs from assembly 521 by an 180° rotation about an axis perpendicular to the x-x axis.

Also shown is a cross sectional view of a stator 562. As seen, the stator has large 534, 536, 538, 540 and small 544, 546, 548 diameter rims centered on an x-x axis. First and second large diameter intermediate rims 536, 538 are interposed between large diameter peripheral rims 534, 540. One small diameter rim is interposed between each pair of large diameter rims such that the rims are stacked in an order 534, 544, 536, 546, 538, 548, and 540. The rims are supported by a coupled stator support 532 that is supported via a wall 530.

A plurality of armature windings e.g. 571, 572 interengage a plurality of the large diameter rim peripheries e.g. 74 via slots or a similar feature. Field windings 535, 537, 539 encircle the stator axis of rotation x-x with one field winding encircling each of the small diameter rims such that each field winding is between a pair of large diameter rims.

As can be seen, the lattice structure of the rotor 569 is arranged such that the first rim of the stator 534 corresponds to the North poles of stage A; the third rim of the stator 536 corresponds to the South poles of stage A and the South poles of stage B; the fifth rim of the stator corresponds to the North poles of stage B and the North poles of stage C; and, the seventh rim of the stator corresponds to the South poles of stage C.

In various embodiments, bearings are used to support the spinning assembly and the included flywheel mass 116, 316, 416. Any combination of the bearings described herein that is sufficient to support the spinning assembly may be used.

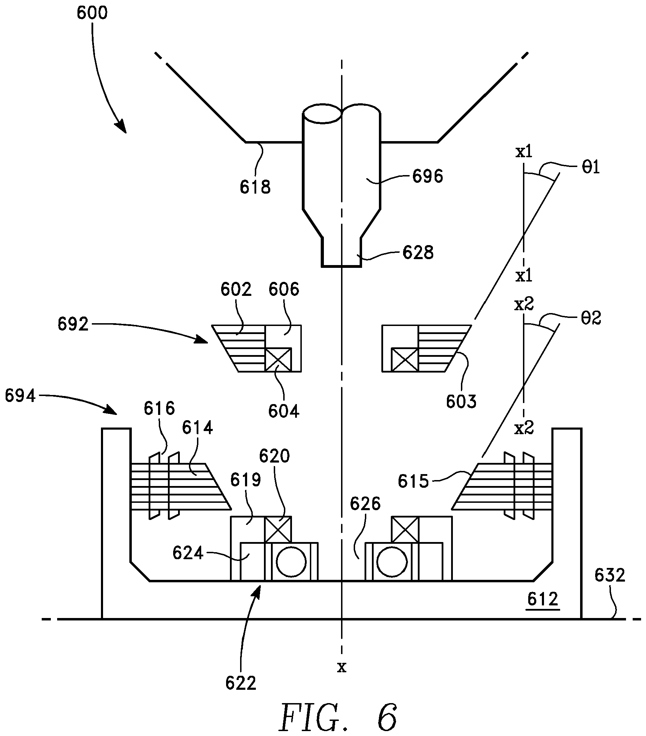

Figure 6 shows a lower bearing carrier and some related parts 600. As shown in the upper half of the drawing, there is a hub 618 for coupling to a flywheel mass, a support pin 696 for supporting the hub 618, a moving suspension assembly for supporting the hub 692, and a lower bearing carrier 694. The hub, support pin, and moving suspension assembly are fixedly coupled together (shown in Figure 6 in exploded diagram format for clarity).

In various embodiments, the moving suspension assembly 692 includes a moving suspension assembly electromagnetic bearing rotor 602. In some embodiments, the bearing rotor is a laminated structure (as shown). In some embodiments, the bearing has a moving suspension assembly electromagnetic bearing face 603 oriented at an angle θ1 = 0° where the angle is defined by the face and an axis x1-x1 parallel to the x-x axis. And, in some embodiments, the bearing has a face 603 oriented at an angle 0< θ1 < 90° ("angled face") (as shown) providing electromagnetic bearing force components parallel to the x-x axis and parallel to an axis perpendicular to the x-x axis.

In various embodiments, the moving suspension assembly 692 includes a moving suspension assembly permanent magnet 604 and in some embodiments the permanent magnet is in addition to the electromagnetic bearing rotor 602. And, in some embodiments, a moving suspension assembly magnet holder 606 provides a holder for either or both of the moving suspension assembly electromagnetic bearing rotor and the moving suspension assembly permanent magnet.

When the moving suspension assembly includes an electromagnetic bearing rotor 602, the lower bearing carrier 694 includes a corresponding lower bearing carrier electromagnetic bearing stator 614 and a lower bearing carrier stator electrical coil 616 for magnetizing the stator. The stator is supported by a lower bearing carrier frame 612 which is in turn supported by a housing wall 632.

In some embodiments, the bearing stator is a laminated structure (as shown). In some embodiments, the bearing has a lower bearing carrier electromagnetic bearing face 615 oriented at an angle θ2 = 0° where the angle is defined by the face and an axis x2-x2 parallel to the x-x axis. And, in some embodiments, the bearing has a face 615 oriented at an angle 0< θ2 < 90° ("angled face") (as shown) providing electromagnetic bearing magnetic force components parallel to the x-x axis and parallel to an axis perpendicular to the x-x axis. As will be appreciated by persons of ordinary skill in the art, the bearing faces 603, 615 interoperate such that a straight rotor face is matched with a straight stator face while an angled rotor face is matched with an angled rotor face.

Where a moving suspension assembly permanent magnet is used 604, the lower bearing carrier includes a geometrically opposed permanent magnet 620. In some embodiments a lower bearing carrier permanent magnet holder 619 supported from the lower bearing carrier frame 612 and supporting the permanent magnet.

In various embodiments, the lower bearing carrier 694 includes a lower bearing carrier landing bearing such as an antifriction bearing 622. As shown, the landing bearing is supported from the lower bearing carrier frame 612. In some embodiments, a damping material 624 provides a seating material for the landing bearing.

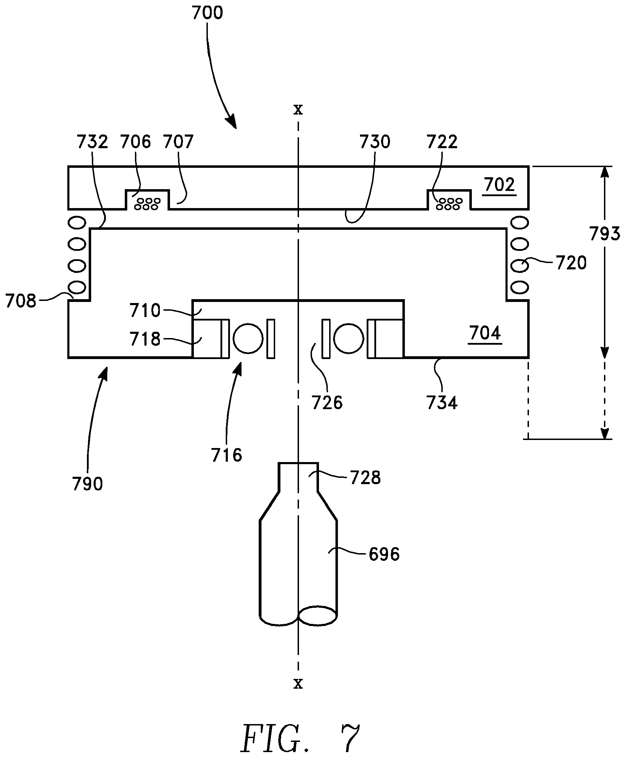

Figure 7 shows an upper bearing carrier and some related parts 700. As shown, the upper bearing carrier 790 includes a stationery plate 702 and a moving plate 704.

The stationery plate 702 includes a coil space 706 in the form of a groove is on a side of the stationery plate facing the moving plate 730. An electrical coil 722 for magnetizing a magnetic material surrounded by the coil 707 is included.

The moving plate 704 includes a spring space 708 and a mechanical bearing space 710. The spring space 708 is formed where a reduced diameter section of the moving plate extends to the side of the plate facing the stationery plate 732 and a spring such as a coil spring 720 occupies this space. The bearing space 710 is a central cavity in a moving plate surface 734 opposite the moving plate surface facing the stationery plate 732. As seen, operation of this electromagnet compresses the spring and tends to draw the plates together.

In various embodiments, the upper bearing carrier 790 includes an upper bearing carrier landing bearing such as an antifriction bearing 716. As shown, the landing bearing is positioned in the moving plate cavity 710. In some embodiments, a damping material 718 provides a seating material for the landing bearing.

As seen in Figures 6 and 7, the support pin 696 extends between the upper bearing carrier 790 and the lower bearing carrier 694. Further, each of the upper bearing carrier landing bearing 716, support pin 696, moving suspension assembly 692, lower electromagnetic bearing stator 614, lower bearing carrier permanent magnet 620, and lower bearing carrier landing bearing 622 is centered on the x-x axis such that when the moving plate 704 moves toward the lower bearing carrier 793, the support pin upper and lower ends 728, 628 are engaged with respective upper and lower landing bearings 716, 622 and a central aperture of each landing bearing 726, 626.

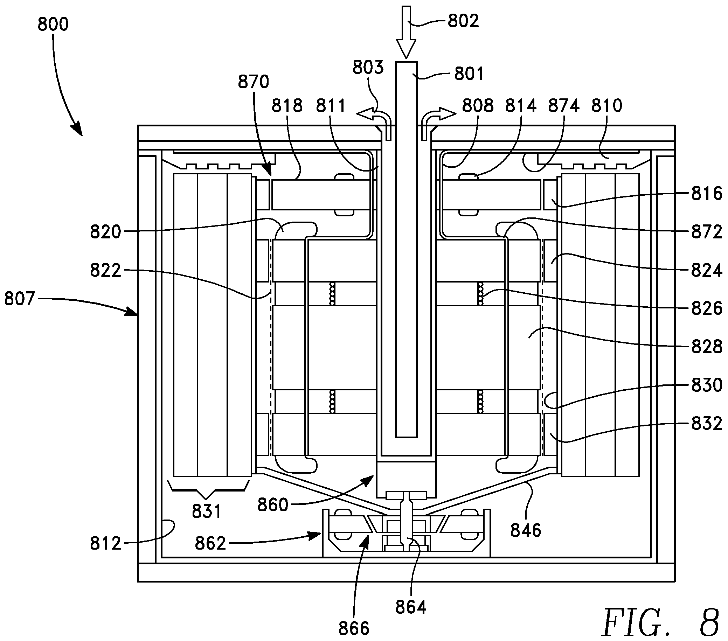

Figure 8 shows another embodiment of an electromechanical flywheel 800. A flywheel mass 831 surrounds and is coupled to a homopolar motor-generator rotor including a metallic liner 830. As shown, the rotor includes rotor North rotor poles 824, 832. Not shown are the South rotor poles; see stages A and B of Figure 5B for a similar arrangement that locates the South rotor poles.

A stator support 811 is coupled to a motor-generator stator 828 and each of field windings 826 and armature windings 820 are interengaged with the stator in a manner similar to that described above.

Supporting the rotor 830 and flywheel mass 831 is a hub 846 that is in turn supported by a support pin 864 engaging and/or located between upper and lower bearing carriers 860, 862. See figures 6 and 7 for details of similar bearing carriers. A first electromagnetic bearing 866 is located in the lower bearing carrier. A second electromagnetic bearing 870 is spaced apart from the first and second bearing carriers and includes a bearing stator 818, a bearing rotor 818 and stator coils 814 for magnetizing the stator.

An electromechanical flywheel housing includes an inner vacuum barrier 812. In some embodiments, an outer housing 807 supports the vacuum barrier. Suitable vacuum barrier materials include stainless steel and other materials known by skilled artisans to be suited to this purpose.

In various embodiments, the stator support 811 has a tubular structure and a coaxial tube 801 is located therein. As shown, the coaxial tube envelops a liquid coolant flow entering the stator support 802 and an annulus between the support structure inside diameter and the coaxial tube outside diameter 815 provides a flow path for coolant leaving the stator support 803. Coolant traveling through the annulus absorbs heat from the stator 828 and is in various embodiments cooled in a cooler (not shown) before it is pumped (not shown) back into the flow entry 802.

Heat pipes 808 provide stator cooling in some embodiments. As shown, each of a plurality of heat pipes has a heat absorbing first end in close proximity to the stator, such as in the stator armature winding slots (as shown) 872. The heat rejecting end of the heat pipe is in close proximity to the vacuum barrier, such as in contact with vacuum barrier (as shown) 874 or in other embodiments cooled by the above mentioned liquid coolant flow.

As can be seen from the above, electromechanical flywheel 100 systems and structures, such as the cooling system 248 and the stator support 122, may have interrelated designs.

Containment systems 101 provide additional examples of interrelated designs. In various containment system embodiments, a plurality of interrelated structures provides one or more of structural support, a vacuum barrier, a primary pressure wall, fluid coolant passages, and heat transfer paths. As will be appreciated by persons of ordinary skill in the art, a primary pressure wall of a primary pressure enclosure serves, among other things, to contain pressures reached and materials released during a flywheel mass failure event.

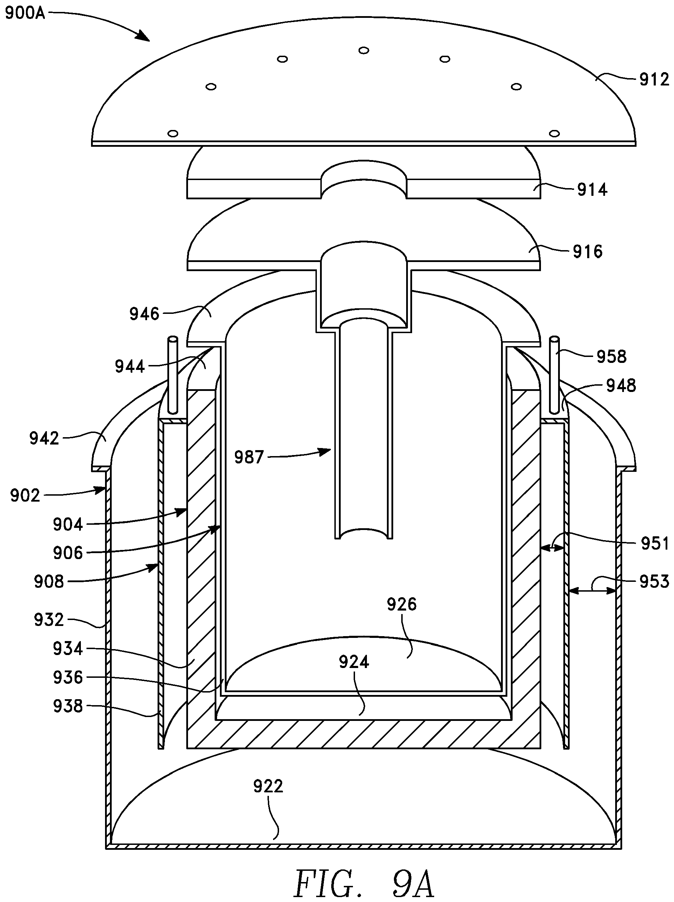

Figure 9A shows an exploded cross-sectional view of a multipurpose containment system 900A. The multipurpose containment system includes an inner enclosure 906 providing a vacuum barrier, an intermediate enclosure 904 providing a primary pressure wall, and an outer enclosure 902 providing a fluid coolant passage. These and other features of the multiple enclosures are described in more detail below. As will be appreciated by skilled artisans, primary pressure wall thickness will typically be determined according to the strength required to contain pressures reached and materials released during a flywheel mass failure event. Thus, the primary pressure wall thickness will depend on the wall material and the conditions encountered including the pressures and forces to be resisted. Where the vacuum barrier is supported by the primary pressure wall, it can typically be thin-walled in comparison to the primary pressure wall. For example, in various embodiments steel primary pressure wall to aluminum vacuum barrier wall thickness ratios in the range of 2 to 20 can be expected.

Inner enclosure 906 includes an inner cylindrical wall 936. An inner lid 916 is operable to close one end of the cylinder via a cylinder flange 946 and an inner floor 926 closes the cylinder's opposing end. As shown in this embodiment, a stator support 987 hangs from a central portion of the inner lid. The inner enclosure is made from a suitable vacuum sealing material such as metals, for example aluminum and/or stainless steel. Aluminum and stainless steel also promote a clean evacuated environment as they resist oxidation and the formation of contaminating particulates. In various embodiments, a clean evacuated environment promotes operation of vacuum pumps including drag pumps and promotes maintenance of a suitable vacuum pressure.

Intermediate enclosure 904 envelopes the inner enclosure 906. The intermediate enclosure includes an inner cylindrical wall 934. An intermediate lid 914 is operable to close one end of the cylinder such that the lid of the inner enclosure 916 is sealed between an end face of the intermediate cylinder 944 and the intermediate lid. An intermediate floor 924 closes the cylinder's opposing end. The intermediate enclosure is made from a suitable pressure vessel material such as metals, for example steel and/or steel alloys. A suitable material thickness is chosen taking into consideration the material used and the energy that must be absorbed during a selected design failure scenario(s). Notably, the wall thickness and/or strength of the pressure vessel can in various embodiments be reduced by limiting energy dissipation requirements; for example, flywheel mass features that slow or reduce flywheel failure energy releases.

While a gap is shown (for clarity) between the inner and intermediate enclosures 906, 904, embodiments with interference fits and/or a heat transfer compound therebetween enable heat transfer from one wall to the other. For example, heat radiated from a stator (see e.g., Figure 8, 828) is transferred to the wall of the inner enclosure 936 and, absent a gap, via conduction to the wall of the intermediate enclosure 934.

Outer enclosure 902 envelops the intermediate enclosure 904. The outer enclosure includes an outer cylindrical wall 932. An outer lid 912 is operable to close one end of the cylinder via a cylinder flange 942 and an outer floor 922 closes the opposing end. The outer enclosure is made from a suitable coolant passage material such as metals, for example steel and/or steel alloys.

A flow divider shroud 908 includes a cylindrical shroud wall 938 for dividing the annulus between the intermediate wall 934 and the outer wall 932 into inner and outer annuli 951, 953. An end of the cylindrical shroud wall includes an inwardly directed sealing ring 948 for sealing between the cylindrical shroud wall and an adjacent structure such as the intermediate cylindrical wall 934, the inner lid 916, and/or the intermediate lid 914. One or more (two shown) coolant fluid exit conduits 958 penetrate the sealing ring and provide a means for exchanging fluid with the inner annular space 951. The shroud is made from a suitable coolant passage material such as metals and plastics. In an embodiment, the shroud is made from a plastic such as a high density polyethylene plastic or a polyvinyl chloride plastic.

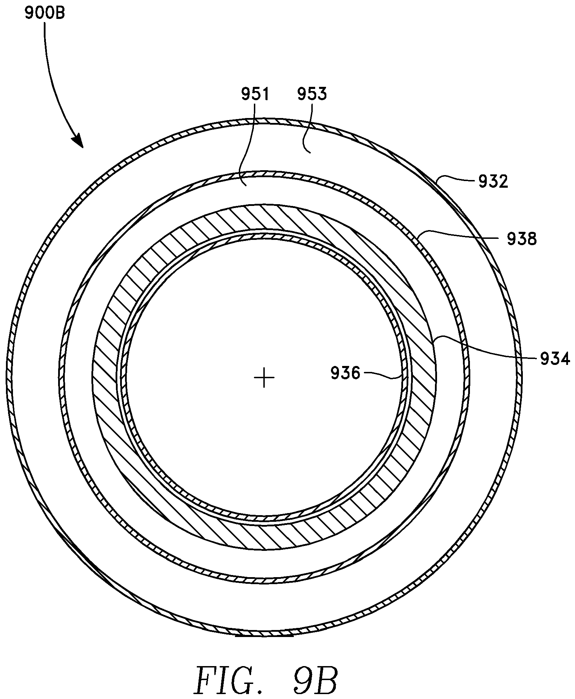

Figure 9B shows a simplified cross-section 900B of the containment system of Figure 9A. As seen, the inner wall 936 is encircled by the intermediate wall 934 and the intermediate wall is encircled by an outer wall 932. The outer wall encircles the shroud wall 938 and the shroud wall encircles the intermediate wall 934 such that the annulus between the intermediate and outer wall is divided into inner 951 and outer 953 annuli.

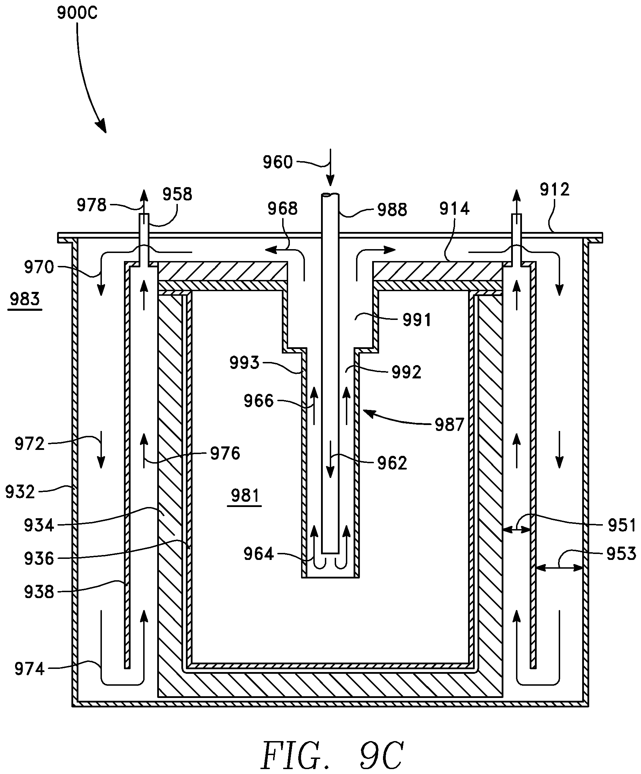

Figure 9C shows the containment system of Figure 9A after its assembly 900C. For clarity, flywheel internals including the stator 120, rotor 114, and flywheel mass are not shown. See Figure 8 for exemplary flywheel internals.

During flywheel operation, heat is released within the inner enclosure flywheel space 981. In various embodiments, this heat is transferred to one or both of a fluid coolant (indicated by flow arrows) and to the surroundings 983. As the fluid coolant moves through the flow passages and elsewhere in the cooling system, heat is alternately absorbed by and rejected by the fluid coolant.

Coolant flow enters the containment system 960 via coolant entry conduit 988 that is inserted in a stator support central cavity 991 defining a stator support annular flow space 992. Flow from the entry conduit 962 empties into the annular flow space 964 where it absorbs heat transported to the stator support wall 993. Flow from the stator support annulus 966 is transported to a fluid plenum 968 between the outer lid 912 and the intermediate lid 914. Flow leaving the plenum 970 is transported to the outer annulus 953. In various embodiments, the coolant rejects heat to the surroundings 983 via heat transfer across the outer enclosure wall 932. Flow 972 from the outer annulus 953 is transported to the inner annulus 974. In various embodiments, the coolant absorbs heat via heat transfer across the intermediate and inner enclosure walls 934, 936. Flow 976 from the inner annulus 951 is transported to the fluid coolant exit conduit(s) 978.

In some embodiments, containment system performance is enhanced through the use of hybrid containment structures such as relatively thin walled enclosure(s) strengthened by an external structure such as an overcoat or an overwrap. Typical overwraps include glass and/or carbon fibers in a polymeric matrix. Performance enhancements include one or more of increased strength, lighter weight, and reduced parts count.

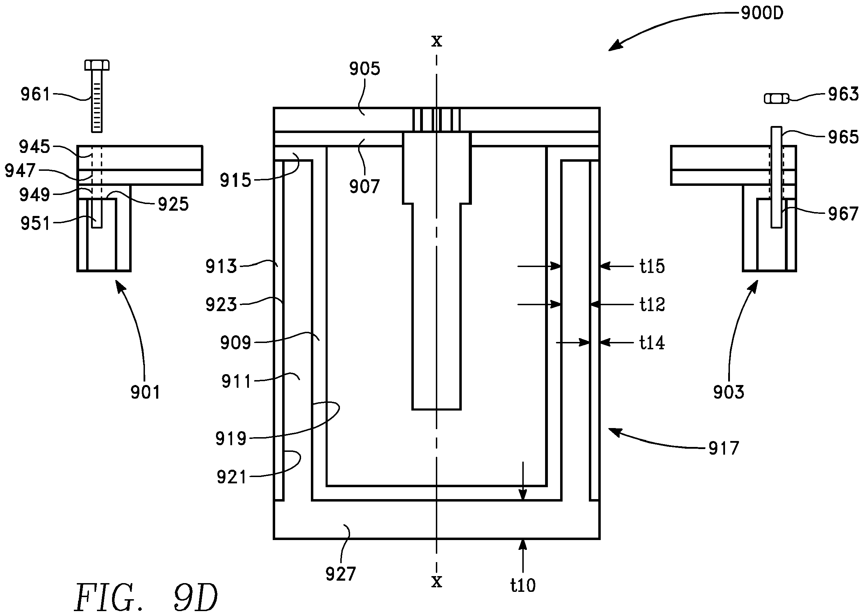

Figure 9D shows a simplified cross-section of a containment system utilizing a hybrid primary pressure enclosure 900D. The hybrid primary pressure enclosure 917 includes an intermediate shell 911 and an outer overwrap 913. An inner enclosure 909 similar to the vacuum barriers described above has a flange 915. The flange is interposed between the hybrid primary pressure enclosure on one side and inner and intermediate lids 907, 905 on the opposite side.

In various embodiments, the thickness of the overwrap t14 together with the thickness of the intermediate shell t12 define a hybrid primary pressure enclosure sidewall thickness t15. The shell bottom has a thickness t10 and in some embodiments t10 > t12 because the bottom is not overwrapped (as shown). As skilled artisans will understand, material thicknesses are chosen based on factors including the type of material, environment, and expected loads.

And, in various embodiments, the hybrid primary pressure enclosure provides for transfer of axial loads x-x between the intermediate shell 911 and the outer overwrap 913. For example, adhesive applied at the interface between the intermediate shell and the overwrap 921 and/or surface features such as a roughened outer surface of the intermediate shell 923 limit relative motion in the axial direction.

Closure features provide for attaching the lids 905, 907 to the hybrid primary pressure enclosure 917. In a first example closure 901 bolts with heads are used to attach the lids. Here, threaded bores 994 in the upper face of the pressure enclosure 925 and mating bores through the flange 949, inner lid 947, and intermediate lid 945 provide for use of threaded bolts 961. In a second example 903 threaded bores 967 in the upper face of the pressure enclosure and mating bores through the flange and lids provide for insertion of threaded studs 965 onto which nuts can be fitted to complete the closure. In various embodiments, threaded inserts located in the overwrap provide the bolted connection rather than threaded bores in the shell (not shown).

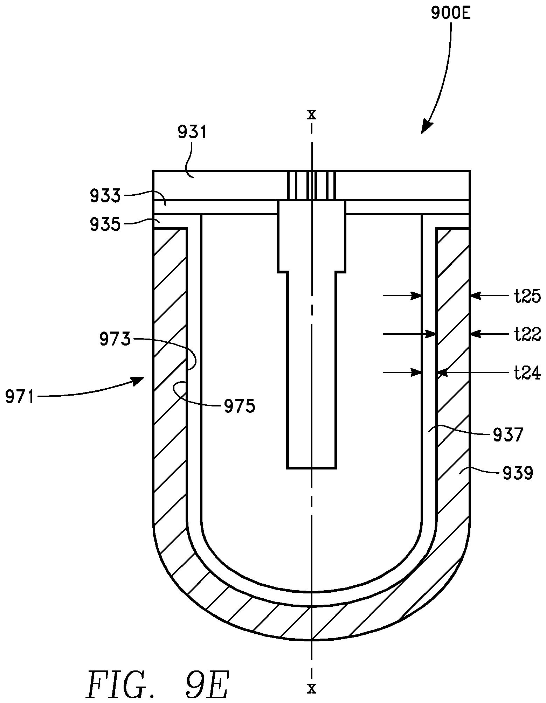

Figure 9E shows a simplified cross-section of a containment system utilizing a hybrid inner enclosure 900E. Here, the hybrid inner enclosure 971 serves the functions of both the inner enclosure and the primary pressure enclosure. The hybrid inner enclosure includes an inner shell 937 and an outer overwrap 939. The inner shell is similar to the vacuum barriers described above and has a flange 915. The flange is interposed between the hybrid inner enclosure on one side and inner and intermediate lids 933, 931 on the opposite side.

In various embodiments, the thickness of the overwrap t24 together with the thickness of the inner shell t22 define a hybrid inner enclosure wall thickness t25. As skilled artisans will understand, material thicknesses are chosen based on factors including the type of material, environment, and expected loads.

And, in various embodiments, the hybrid primary pressure enclosure provides for transfer of axial loads x-x between the inner shell 937 and the outer overwrap 939. For example, adhesive applied at the interface between the inner shell and the overwrap 973 and/or surface features such as a roughened outer surface of the inner shell 975 limit relative motion in the axial direction. Closure features include those discussed above and others known to persons of ordinary skill in the art.

In operation, a flywheel mass of the electromechanical flywheel is accelerated by the motor-generator during flywheel charging. During charging, energy is transferred to the motor-generator. During discharge, the motor-generator converts the kinetic energy of the flywheel into electrical energy as the flywheel mass is decelerated. Power electronics provide for conversion of network electric power in order to motor the motor-generator and the mechanically coupled flywheel mass. Power electronics also provide for conversion of motor-generator generated electric power into a waveform suited for use by the electrical network to which the electric power is transferred.

In operation, a containment system provides a primary pressure wall. For example, as shown in Figure 9C, containment system 900C provides a primary pressure wall 906 should a failure such as a flywheel failure occur. In various embodiments: a vacuum barrier is provided by an inner enclosure 902 which enables vacuum maintenance in the flywheel space 981; a coolant flow space is provided by an outer enclosure 902; and, the coolant flow space is divided into inner and outer annular flow passages 951, 953 by a flow divider shroud 908. Heat absorbed by coolant flowing in the stator support 987 and heat absorbed by coolant flowing in the inner annular flow passage is rejected via one or both of heat transfer through the outer enclosure wall 932 to the environment 983 and heat transferred from the fluid external to the containment system such as via a fin-fan cooler (not shown).

Other uses of multiple enclosures include mechanical isolation of nested enclosures such as limiting motion transfers between enclosures.

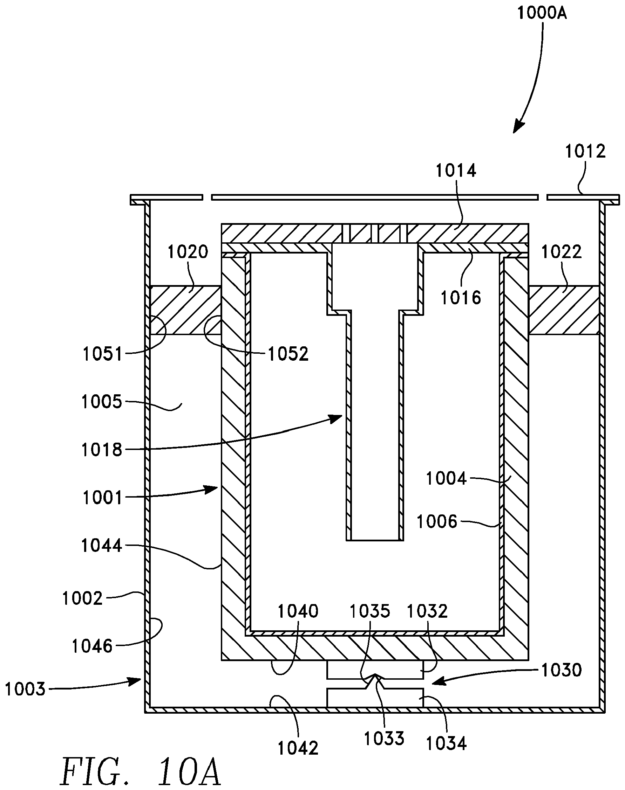

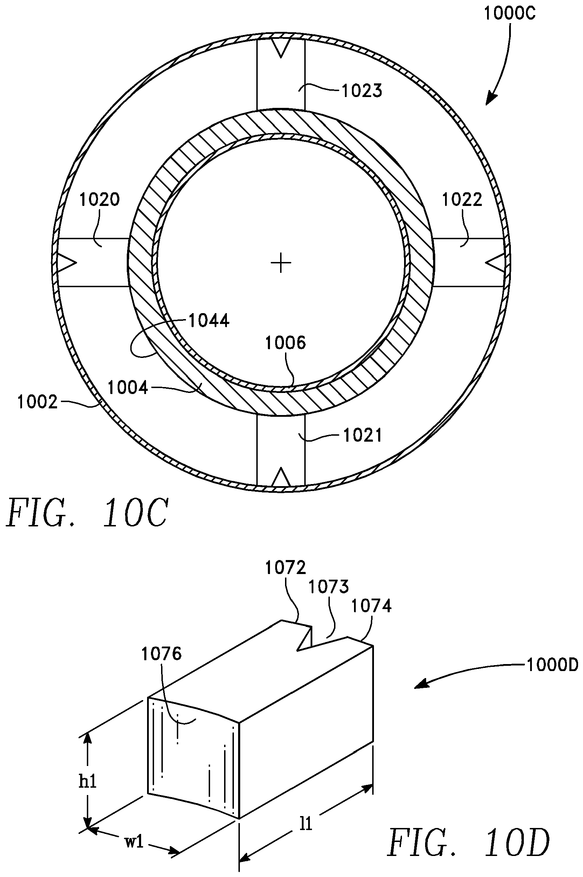

Figures 10A-D show a mechanical isolation system 1000A-D for an electromechanical flywheel such as the electromechanical flywheel similar to that shown in Figure 8. Shown in Figure 10A is an outer assembly 1003 and an inner assembly 1001.

Outer assembly parts include an outer enclosure 1002, an outer enclosure lid 1012, an inner enclosure 1006, an inner enclosure lid 1016, and a stator support 1018. Inner assembly parts include an intermediate enclosure 1044, stator support 1018, inner lid 1016, and intermediate lid 1014. Note that the stator, rotor, bearings, and other parts discussed above are not shown in Figures 10A-C for clarity. Refer to the figures and related discussion above for examples of these items.

The inner and outer assemblies 1001, 1003 can be mechanically isolated, at least in part, with materials and/or devices providing spring-like, damper-like, and/or pivot-like actions limiting/softening transfers of motion between the assemblies. In various embodiments, the assemblies can be isolated by allowing radial (assembly centerlines) offsets such that centerlines of the assemblies diverge, axial offsets such that an assembly axial spacing varies, and by combinations of these misalignments.

In an embodiment, the inner assembly 1001 is supported by a lower pivot type support 1030 and one or more upper resilient supports 1020-1023. As shown, the lower pivot support has a male pivot structure 1034 mated with a female pivot structure 1032. Whether the pivot is substantially pointed (as shown) or is rounded such as with a ball and socket, or takes another form known to skilled artisans is influenced by variables such as one or more of choice of materials, load, speed, and manufacturing and assembly considerations. And, whether the male and female attachments coupled are as shown, to the outer enclosure floor 1042 and the intermediate enclosure bottom 1040, or vice versa, is influenced by variables such as manufacturing and assembly considerations.

When the inner and outer assemblies 1001, 1003 are fitted together, the outer enclosure 1002 provides support for the inner assembly 1001.

Support in both radial and axial directions is provided by the pivot support 1030 via a female pivot socket 1033 that receives a male pivot projection 1035 such that the intermediate enclosure 1004 is bottom supported 1040 from a floor 1042 of the outer enclosure.

Support primarily in the radial direction is provided by the resilient support(s) 1020-1023 that are located in the annular space between the inner and outer enclosures 1005. As shown in Figure 10A, the resilient supports 1020, 1022 extend 1051, 1052 between the outer surface of the intermediate enclosure 1044 and the inner surface of the outer enclosure 1046. In various embodiments, the resilient supports are coupled to one or both of the outer and intermediate enclosures via adhesive, fasteners, or another means known to persons of ordinary skill in the art.

Resilient supports include mechanical devices such as mechanical spring-damper devices and supports formed from a bulk material having desired characteristics such as compressibility, damping properties, spring properties, and operating temperature. Suitable bulk materials are chosen to correspond with anticipated loads and desired operating conditions. Typical generic materials include natural rubbers, synthetic rubbers including butyl rubber, and various polymers such as polyurethane. Typical specialty products include BASF Cellasto® materials and DuPont Vamac® materials.

Figure 10D shows a resilient support block made from a bulk material 1000D. As shown, the block has a cross-sectional area described by its width w1 and height h1. The block has a length ℓ1 which is chosen along with its cross-sectional area to provide appropriate support when made from a selected material. The block has a first face 1076 for interfacing with the outside surface 1044 of the intermediate enclosure 1004. Opposite the first face at a first end is a second face at a second end for interfacing with the inside diameter 1046 of the outer enclosure 1002. As shown, the second face is actually in two parts 1072, 1074 resulting from a "V" shaped portion 1073 being cut from the second end. Varying the geometry of the block along with the material choices enables the blocks to be adapted to suit a wide range of design criteria as will be appreciated by persons of ordinary skill in the art.

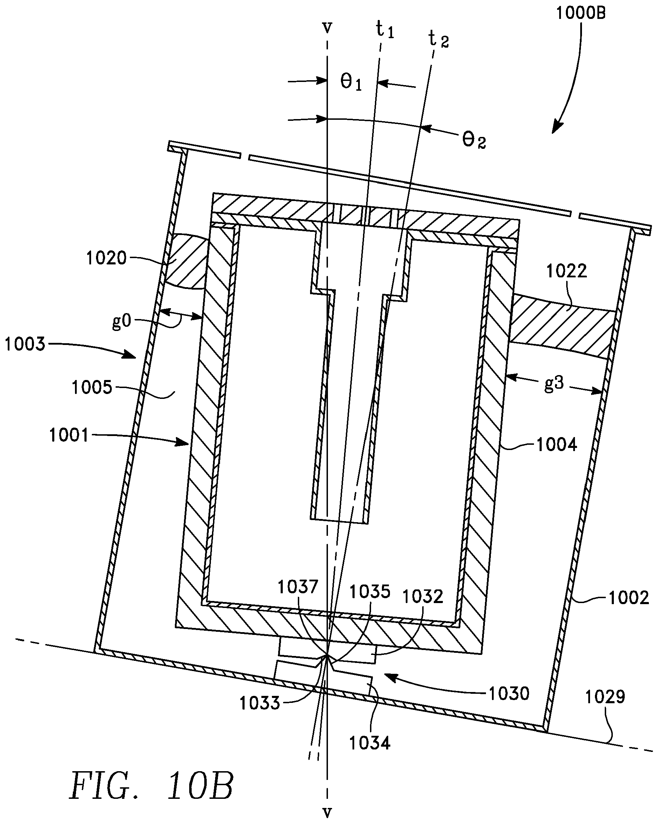

In Figure 10B, a central axis of the inner enclosure "t1" and a central axis of the outer enclosure "t2" are not coincident after the assemblies 1001, 1003 have experienced a movement, for example a sudden tilting of a supporting floor 1029 away from a vertical axis "v." Responding to the inertial forces resulting from the movement, the central axes move away from the vertical axis and form angles θ1, θ2 with the vertical axis. As seen, the resilient supports located on opposing sides of the annulus conform to the altered annulus.

In particular, a shortened resilient support 1020 conforms to a diminished gap g0 and a lengthened resilient support 1023 conforms to an enlarged gap g3. In various embodiments, the resilient supports are compressed when installed in a uniform annulus and in various embodiments the resilient supports are stretched when installed in a uniform annulus.

As can be seen, the resilient supports work with the pivot support to limit movements of the inner enclosure. This example shows the assemblies 1001, 1003 respond to the movement with tilting to the outer enclosure to an angle θ2 that is greater than tilting of the inner enclosure to an angle θ1 (θ2 > θ1). As will be appreciated by persons of ordinary skill in the art, limiting motions of the inner enclosure reduces the forces that electromagnetic bearings (e.g. 451, 692, 694) must apply to assure a magnetically levitated spinning assembly (e.g. 310, 410) is held in position with respect to a stator (e.g. 422).

In some cases, electromagnetic bearings (e.g. 451, 692, 694) are unable to hold the spinning assembly (e.g. 310, 410) in position relative to the stator (e.g. 422) and a flywheel mass failure occurs. As discussed in connection with Figures 3A-C above, flywheel mass failures dissipate the energy stored in the flywheel. As will be appreciated by persons of ordinary skill in the art, a safe means of dissipating the energy released during a flywheel mass failure event is needed.

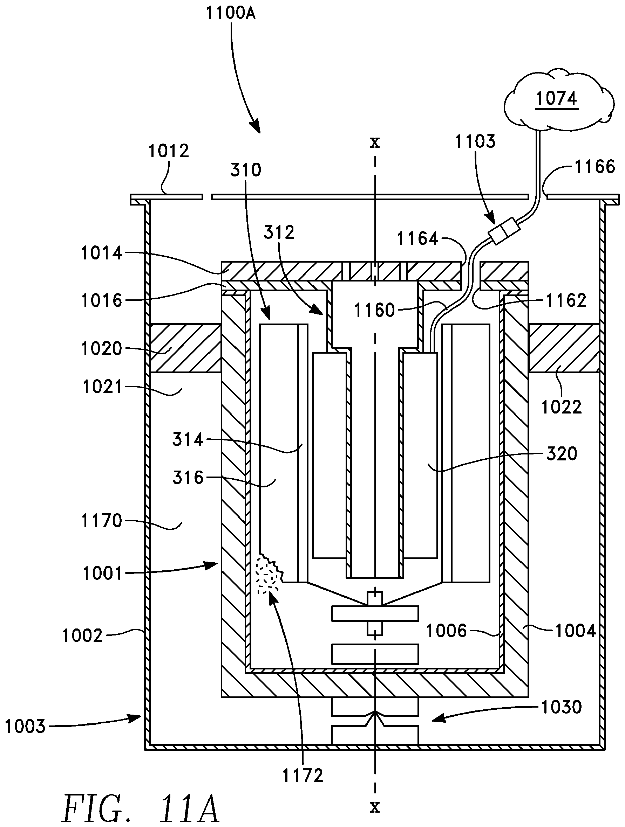

Figure 11A shows an electromechanical flywheel with energy dissipation features 1100A. An outer assembly 1003 encloses an inner assembly 1001 which encloses a spinning assembly 310 and a core assembly 312. The inner assembly is bottom supported by a lower pivot support 1030 interposed between the inner and outer assemblies. Upper resilient support(s) 1020, 1022 located in an annulus 1021 between the inner and outer assemblies provide the inner assembly with lateral support.

Among other things, a flywheel mass failure event tends to transfer angular momentum to the inner assembly 1001 when portions and/or particles of a fractured flywheel mass 1172 impinge on the inner enclosure 1006. To the extent the inner assembly rotates, the angular momentum can be dissipated by frictional forces at the pivot support 1130 and/or by viscous forces applied by a fluid 1170 located in the annulus 1021. However, stator leads from stator coils hinder this relative rotation. For example, a stator lead 1160 (only one shown for clarity) extending from the stator 320 to a location outside the outer assembly 1074 prevents the inner assembly from rotating freely on the pivot support 1030. As shown in this embodiment, a stator lead path passes through an inner enclosure lid feed through 1162, through an intermediate enclosure lid feed through 1164, and through an outer enclosure lid feed through 1166. Freeing the inner assembly for rotation relative to the outer assembly therefore requires separation of the stator lead. Stator lead separation devices 1103 are described below.

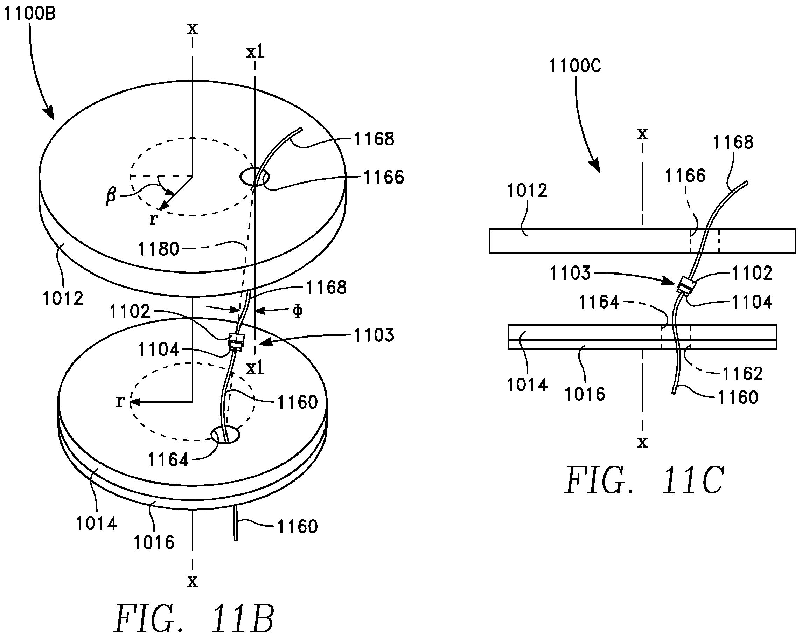

Figure 11B shows a perspective view of a stator lead coupling 1100B and Figure 11C shows a side view of a stator lead coupling 1100C. In the figures, the stator lead coupling 1103 is located between the intermediate enclosure lid 1014 and the outer enclosure lid 1012 and the x-x axis passes through the centers of the lids 1012, 1014. 1016. In various embodiments, the stator lead coupling is any of a frangible connection, an explosive coupling, a resilient coupling, a spring loaded coupling, a plug and socket connection, a coupling using a conductive material between moving parts, and the like.

In an embodiment, the stator lead coupling includes a plug 1104 and a socket 1102. Here, the stator lead 1160 passes through the inner enclosure feed through 1162 (see Figures 11A and 11C), through the intermediate enclosure feed through 1164 and is conductively fixed to the coupling plug 1104. Notably, one or more stator leads may be affixed to a single plug, for example where a stator phase has multiple windings (one stator lead shown). When the stator lead coupling is assembled, the coupling plug is inserted in a coupling socket 1102; a coupling lead 1168 extending from the location outside the outer assembly 1074 is conductively fixed to the coupling socket 1102. A force tending to separate the stator lead coupling is applied when relative rotation of the upper 1166 and lower 1162, 1164 feed throughs puts the stator lead coupling in tension. As will be appreciated, the stator lead coupling will be separated when sufficient force is exerted to pull the plug out of the socket.

In some embodiments, the upper 1166 and lower 1162, 1164 feed throughs are offset by an angle β > 0 such that the stator lead 1160, stator lead coupling 1103, and coupling lead 1168 lie substantially along a line 1180 making an angle φ with respect to a line x1-x1 parallel to the x-x axis. As shown, the stator lead coupling is tensioned when the outer enclosure lid 1012 rotates counterclockwise relative to the intermediate 1014 and inner 1016 enclosure lids. And, as persons of ordinary skill in the art will recognize, the angled arrangement β > 0, φ > 0 (as compared with an arrangement where β = 0, φ = 0) tends to separate the coupling with a smaller relative rotation of the outer enclosure lid 1012 with respect to the inner 1014 and intermediate 1016 enclosure lids.

In some embodiments plural stator lead couplings are designed for staggered separation when there is relative rotation of the outer enclosure lid 1012 with respect to the inner 1014 and intermediate 1016 enclosure lids. For example, an embodiment includes plural stator lead couplings 1103 with respective stator leads 1160 and coupling leads 1168. Each stator lead passes through the same feed throughs 1162, 1164 in the inner and intermediate enclosure lids 1016, 1014 and each coupling lead passes through the same feed through 1166 in the outer enclosure lid 1012. Further, each stator lead and coupling lead combination has a length that is different from the other stator lead and coupling lead combinations. As will be understood by skilled artisans, the differing lengths of the stator lead and coupling lead combinations can be used to provide a staggered sequence of stator lead coupling separations in response to relative rotation of the enclosure lids.

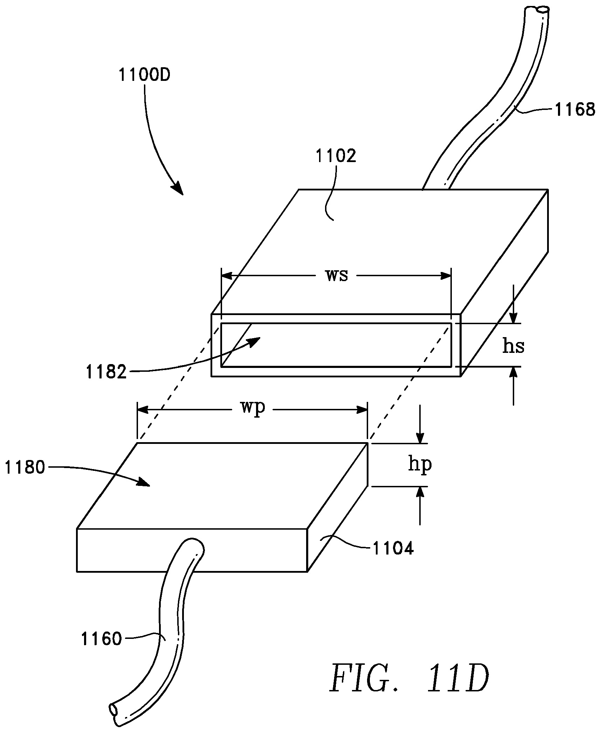

Figure 11D shows an embodiment of the plug and socket stator lead coupling 1100D. A stator lead 1160 is conductively attached to a coupling plug 1104 and a coupling lead 1168 is conductively attached to a coupling socket 1102. Mating of the plug and socket provides a current path between the conductors 1160, 1168. Plug and socket arrangements include those using springs, resilient parts, and gravity forces.

In an embodiment the plug and socket shown in Figure 11D relies on an interference fit(s) to make and hold electrical contact. For example, wp > ws and/or hp > hs provide an interference fit. Other interference fit arrangements also provide for mating a plug and socket such as ridge and groove fits, conical fits, and the like.

As will be appreciated by skilled artisans, plug and socket designs use utilize conductive materials for the plug and the socket such as copper, aluminum, silver, gold, alloys of these materials, and the like. In various embodiments, a conductive material fills a space between the plug and socket and/or is used to coat one or both parts prior to assembly. Conductive materials include conductive lubricants and sealant greases such as lamellar graphite, gold, gold alloyed with cobalt or nickel (< 1 wt %, i.e. "hard gold") deposited as a thin layer (about 0.1 micrometer), palladium-nickel and palladium-cobalt, polyphenyl ethers (PPEs), electrical power connection greases containing finely divided zinc or silver, and the like.

As shown in this embodiment, a stator lead path passes through an inner enclosure lid feed through 1162, through an intermediate enclosure lid feed through 1164, and through an outer enclosure lid feed through 1166. Freeing the inner assembly for rotation relative to the outer assembly therefore requires separation of the stator lead. Stator lead separation devices 1103 are described below.

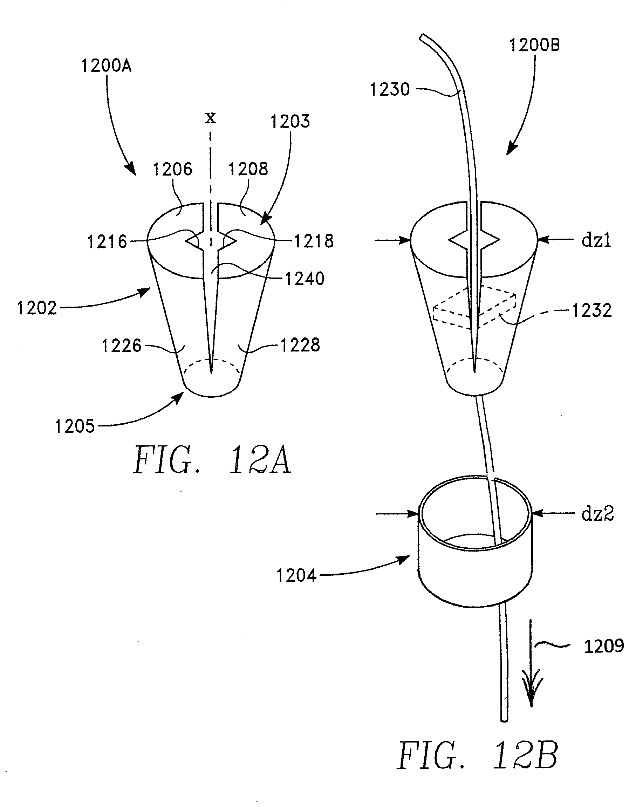

FIGS. 12A-E illustrate another means of freeing the inner assembly for rotation relative to the outer assembly. Here, a cutting mechanism separates a stator lead into separate segments such as upper and lower stator lead segments 1168, 1160.

FIG. 12A shows a first cutter mechanism in the form of a slotted cone cutter 1200A. A generally conical or truncated conical body 1202 has a cutter end 1203 and a non-cutter end 1205. The body has opposed slots 1240 along a portion of its length forming first and second body halves 1226, 1228 with respective cutter jaws 1206, 1208 in a plane about perpendicular to the cone's axis x-x. The jaws have respective opposed cutter surfaces such as cutter notches 1216, 1218 in which a stator lead is cut when the jaws close.

FIG. 12B shows a stator lead inserted in the cutter mechanism of FIG. 12A 1200B. In particular, a stator lead 1230 passes through the conical cutter body and through a cutter receiver such as the cylindrical structure shown 1204. Notably, the cylindrical structure represents, in various embodiments, any appropriately dimensioned structure such as of an intermediate enclosure lid feed through 1164 and an outer enclosure lid feed through 1166. In some embodiments, a feed through provides a seat for a separate cutter receiver.

Embodiments provide a coupling between the stator lead and the conical cutter such that when the stator lead moves, so too does the conical cutter. For example, a block 1232 attached to the stator lead provides this coupling when the block is too large to pass through the cutter's non-cutter end 1205. The result is that cutter/block interference causes the cutter to move with the stator lead. As seen in FIG. 12B, stator lead movement 1209 tending to draw the stator lead through the cutter receiver 1204 will cause the conical cutter to be drawn into the cutter receiver. Interference between the cutter and receiver (dz2 < dz1) will cause the cutter jaws 1206, 1208 to close and to sever the stator lead.

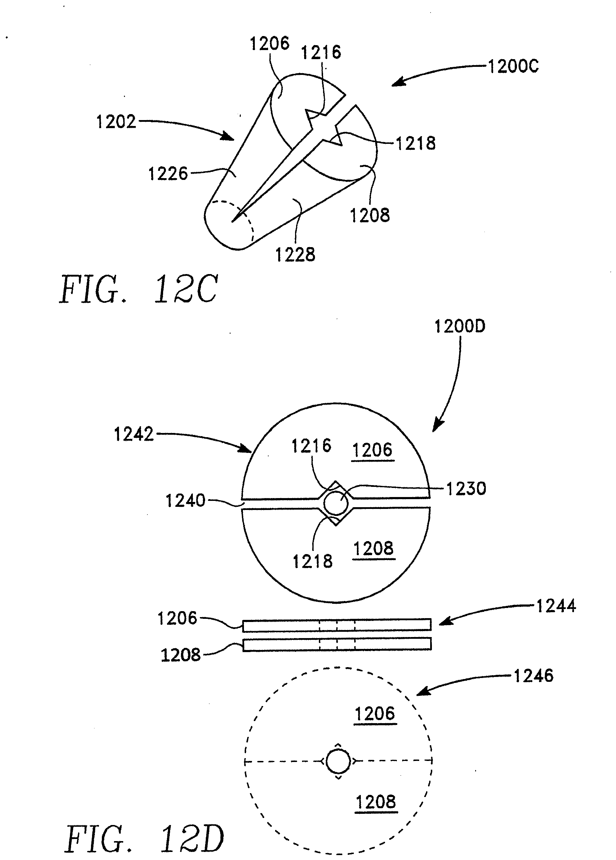

FIGS. 12C,D show the conical cutter and details of the jaws 1200C,D. FIG. 12C shows the conical cutter jaws 1206, 1208 in perspective while FIG. 12D shows a top view of the open jaws 1242, a side view of the jaws 1244, and a top view of the closing jaws 1246. In particular, jaw side view 1244 illustrates the overlapping arrangement of the jaws which facilitates jaw closure. As skilled artisans will appreciate, numerous conical cutter arrangements similar to the one disclosed can be used to provide a stator lead cutter.

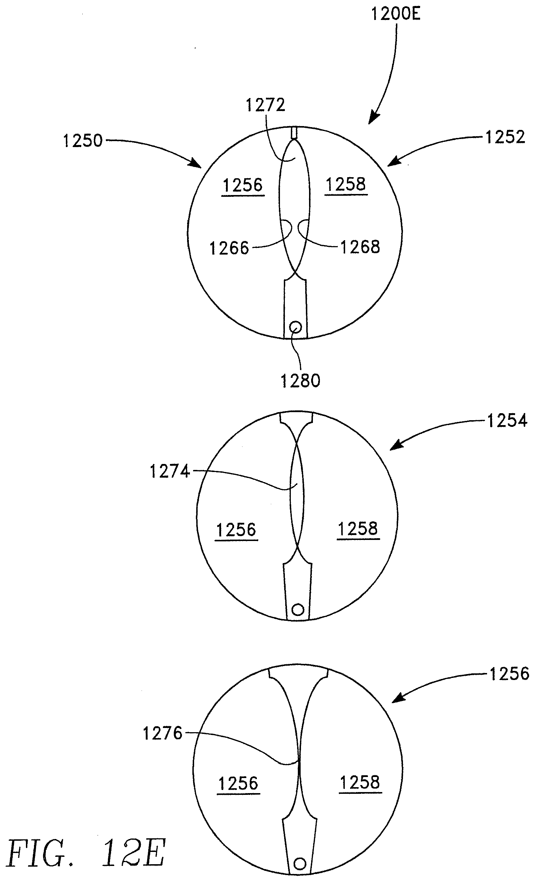

FIG. 12E illustrates a pinned jaw stator lead cutter 1200E. Here, overlapping jaws 1256, 1258 are pivoted 1280 at one side to provide relative motion of one jaw with respect to the other jaw. In the normally open position 1252, the jaws encircle a passage 1272 through which a stator lead (not shown) passes. In a cutting position 1254, the jaws pivot to begin closing the passage 1274. In the fully closed position 1256, the passage is fully closed 1257, the stator lead is fully cut.

Operation of the pinned jaw cutter 1200E may use any of the methods discussed above, including a conical type actuating arrangement similar to the one of FIG. 12B. Other means may also be used for actuating stator lead cutting jaws. For example, magnetic (eg., motor or solenoid), pneumatic (eg., air operated motor or plunger), explosive, and momentum devices may be used to actuate the cutter. In yet other embodiments, movement of the stator lead while the lead is in contact with one or more cutter jaws engages the stator lead and the jaw(s) such that stator lead cutting is accomplished without need for separately operating the jaws.

While various embodiments of the present invention have been described above, it should be understood that they have been presented by way of example only, and not limitation. It will be apparent to those skilled in the art that various changes in the form and details can be made without departing from the scope of the invention. As such, the breadth and scope of the present invention should not be limited by the above-described exemplary embodiments, but should be defined only in accordance with the following claims.

## Claims

1. An electromechanical flywheel safety system comprising:
inner and outer enclosures;
a flywheel mass (357);
the inner enclosure (328; 1006) enveloping the flywheel mass;
the outer enclosure (338; 1002) enveloping the inner enclosure;
at least a first portion (356) of the flywheel mass designed to fail at a first flywheel mass rotational speed;
**characterized by**:
at least a second portion (354) of the flywheel mass designed to fail at a second flywheel mass rotational speed; and,
the first flywheel mass rotational speed being less than the second flywheel mass rotational speed such that in a flywheel mass overspeed failure event, the first portion of the flywheel mass fails before the second portion of the flywheel mass fails.

2. The electromechanical flywheel safety system of claim 1 wherein an inner enclosure design operative to resist a breach resulting from failure of the first portion of the flywheel mass is also operative to resist a breach in the event the second portion of the flywheel mass fails thereafter.

3. The electromechanical flywheel safety system of claim 1 or 2 further comprising:
a flywheel mass axis of rotation (x-x) wherein with respect to the axis, the first portion is an outer layer and the second portion is an inner layer.

4. The electromechanical flywheel safety system of any preceding claim wherein the flywheel mass second portion is designed to store an amount of kinetic energy that is substantially equal to the amount of kinetic energy stored by the first portion.

5. The electromechanical flywheel safety system of any preceding claim wherein the second portion is circumferentially enclosed by first portion.

6. The electromechanical flywheel safety system of any preceding claim further comprising:
a pivot type bearing (1030) between the inner (1004) and outer (1004) enclosures; and,
a rotational centerline of the flywheel mass passing through the pivot bearing.

7. The electromechanical flywheel safety system of claim 6 further comprising:
one or more resilient bearings (1020, 1022) in an annulus defined by the inner and outer enclosures;
the resilient bearings spaced apart from the pivot bearing; and,
the bearings chosen to limit motion transfers between the first and the second enclosures.

8. The electromechanical flywheel safety system of claim 7 wherein at least one of the bearings incorporates a visco-elastic material.

9. The electromechanical flywheel safety system of any preceding claim further comprising:
a vacuum enclosure within the inner enclosure;
the inner enclosure being a metallic primary pressure enclosure designed to contain the products of a flywheel mass overspeed failure; and,
the vacuum enclosure being a metallic enclosure and having a relatively thin side wall as compared with the thickness of a primary pressure enclosure side wall.

10. The electromechanical flywheel safety system of any preceding claim further comprising:
a metallic vacuum enclosure within the inner enclosure; and,
the inner enclosure including a carbon fiber composite sidewall encircling the vacuum enclosure.

11. The electromechanical flywheel safety system of any preceding claim further comprising:
a metallic vacuum enclosure within the inner enclosure;
an energy exchange block including
a core assembly (312) including a motor-generator stator (320) having plural stator electrical leads and a stator support (322) and
a spinning assembly (310) including a motor-generator rotor (314) and the flywheel mass (316); and,
the motor-generator rotor encircling the motor-generator stator.

12. The electromechanical flywheel safety system of any preceding claim further including:
respective spaced apart lids for the inner and outer enclosures;
a first feed through (1162) in the inner enclosure lid (1016) and a second feed through (1166) in the outer enclosure lid (1012);
a separable stator lead coupling (1103) located between the enclosure lids;
the stator lead coupling providing an electric current path between a stator electrical lead (1160) and a coupling lead (1168);
the stator lead extending between a stator winding and the stator lead coupling;
the stator lead passing through the first feed through;
the coupling lead extending between the stator lead coupling and a location outside the outer enclosure;
the coupling lead passing through the second feed through; and,
relative rotation of the inner and outer lids operative to separate the separable stator lead coupling.

13. The electromechanical flywheel safety system of claim 12 further comprising:
a lid centerline passing through the centers of the enclosure lids;
an angular offset between the first and second feed throughs;
the offset operative to extend the distance between the first and second feed throughs;
the offset operative to orient the stator lead coupling and adjacent portions of the stator lead and coupling lead at an angle with respect to a line parallel to the lid centerline; and,
as compared with no angular offset, the offset operative to reduce the relative rotation of the inner and outer enclosures required to separate the separable stator lead coupling.

14. The electromechanical flywheel safety system of claims 12 or 13 further comprising:
a plurality of the stator lead couplings and respective stator leads and coupling leads;
each of the stator leads passing through the first feed through;
each of the coupling leads passing through the second feed through;
each stator lead and coupling lead combination having a length that is different from the other one or more stator lead and coupling lead combinations; and,
the differing lengths operative to provide a staggered sequence of stator lead coupling separations in response to relative rotation of the inner and outer lids.

15. The electromechanical flywheel safety system of claims 12 to 14 further including:
respective spaced apart lids of the inner and outer enclosures;
a first feed through (1162) in the inner enclosure lid (1016) and a second feed through (1166) in the outer enclosure lid (1012);
a stator lead (1160) extending through the first and second feed throughs; and,
a cutter (1200A) configured to sever the stator lead when the stator lead moves relative to an enclosure lid during a flywheel failure event.

## Patentansprüche

1. Sicherheitssystem für ein elektromechanisches Schwungrad, umfassend:
eine Schwungradmasse (357);
ein die Schwungradmasse einhüllendes Innengehäuse (328; 1006);
ein das Innengehäuse einhüllendes Außengehäuse (338; 1002);
zumindest ein erster Teil (356) der Schwungradmasse ist so ausgelegt, dass er bei einer ersten Schwungradmassendrehzahl ausfällt;
**dadurch gekennzeichnet ist, dass**:
zumindest ein zweiter Teil (354) der Schwungradmasse so ausgelegt ist, dass er bei einer zweiten Schwungradmassendrehzahl ausfällt; und
die erste Schwungradmassendrehzahl kleiner ist als die zweite Schwungradmassendrehzahl, so dass der erste Teil der Schwungradmasse bei einem Schwungradmassenüberdrehzahl-Ausfallereignis ausfällt, bevor der zweite Teil der Schwungradmasse ausfällt.

2. Sicherheitssystem für ein elektromechanisches Schwungrad gemäß Anspruch 1, wobei die Innengehäusekonstruktion dafür ausgelegt ist, einer Bruchstelle standzuhalten, die aus einem Versagen des ersten Teils der Schwungmasse resultiert und auch einer Bruchstelle standzuhalten, falls der zweite Teil der Schwungradmasse versagt.

3. Sicherheitssystem für ein elektromechanisches Schwungrad gemäß Anspruch 1 oder 2, ferner umfassend:
eine Rotationsachse der Schwungradmasse (x-x), wobei der erste Teil in Bezug auf die Achse eine äußere Schicht und der zweite Teil eine innere Schicht darstellt.

4. Sicherheitssystem für ein elektromechanisches Schwungrad gemäß einem der vorhergehenden Ansprüche, wobei der zweite Teil der Schwungradmasse dafür ausgelegt ist, eine kinetische Energiemenge zu speichern, die im Wesentlichen gleich der kinetischen Energiemenge ist, die vom ersten Teil gespeichert wird.

5. Sicherheitssystem für ein elektromechanisches Schwungrad gemäß einem der vorhergehenden Ansprüche, wobei der Umfang des zweites Teils vom ersten Teil umschlossen wird.

6. Sicherheitssystem für ein elektromechanisches Schwungrad gemäß einem der vorhergehenden Ansprüche, ferner umfassend:
ein Gelenklager (1030) zwischen dem Innen- (1004) und dem Außengehäuse (1004); und,
eine Rotationsmittellinie der Schwungradmasse, die durch das Gelenklager verläuft.

7. Sicherheitssystem für ein elektromechanisches Schwungrad gemäß Anspruch 6, ferner umfassend:
ein oder mehrere elastische Lager (1020, 1022) in einem durch die Innen- und Außengehäuse definierten Hohlrad;
wobei die elastischen Lager vom Gelenklager beabstandet sind; und
die Lager so gewählt sind, dass Bewegungsübertragungen zwischen dem ersten und dem zweiten Gehäuse begrenzt werden.

8. Sicherheitssystem für ein elektromechanisches Schwungrad gemäß Anspruch 7, wobei mindestens eines der Lager ein viskoelastisches Material enthält.

9. Sicherheitssystem für ein elektromechanisches Schwungrad gemäß einem der vorhergehenden Ansprüche, ferner umfassend:
ein Vakuumgehäuse im Innengehäuse;
wobei das Innengehäuse ein metallisches Primärdruckgehäuse ist und dafür ausgelegt ist, die Gegenstände aufzunehmen, die bei einem Schwungradmassenüberdrehzahl-Ausfallereignis entstehen; und
das Vakuumgehäuse ein metallisches Gehäuse mit einer im Vergleich zur Seitenwanddicke des Primärdruckgehäuses relativ dünnen Seitenwand ist.

10. Sicherheitssystem für ein elektromechanisches Schwungrad gemäß einem der vorhergehenden Ansprüche, ferner umfassend:
ein metallisches Vakuumgehäuse im Innengehäuse;
das Innengehäuse enthält eine Seitenwand aus CFK, die das Vakuumgehäuse umgibt.

11. Sicherheitssystem für ein elektromechanisches Schwungrad gemäß einem der vorhergehenden Ansprüche, ferner umfassend:
ein metallisches Vakuumgehäuse im Innengehäuse;
einen Energieaustauschblock einschließlich
einer Kernanordnung (312) mit einem Umformer-Stator (320), der mehrere elektrische Statorleitungen undeine Statorhalterung (322) aufweist einer rotierenden Anordnung (310) mit einem Umformer-Rotor (314) und
einer Schwungradmasse (316); und
wobei der Umformer-Rotor den Umformer-Stator umkreist;

12. Sicherheitssystem für ein elektromechanisches Schwungrad gemäß einem der vorhergehenden Ansprüche, ferner beinhaltend:
jeweils voneinander beabstandete Deckel für die Innen- und Außengehäuse;
eine erste Durchführung (1162) im Innengehäusedeckel (1016) und eine zweite Durchführung (1166) im Außengehäusedeckel (1012);
eine zwischen den Gehäusedeckeln angeordnete trennbare Statorleitungskupplung (1103);
wobei die Statorleitungskupplung zwischen der elektrischen Statorleitung (1160) und der Kopplungsleitung (1168) einen elektrischen Strompfad bereitstellt;
wobei sich die Statorleitung zwischen der Statorwicklung und der Statorleitungskupplung erstreckt;
wobei die Statorleitung durch die erste Durchführung verläuft;
wobei sich die Kupplungsleitung zwischen der Statorleitungskupplung und einer außerhalb des Außengehäuses liegenden Stelle erstreckt;
wobei die Kupplungsleitung durch die zweite Durchführung verläuft;
wobei die relative Drehung der Innen- und Außendeckel die trennbare Statorleitungskupplung teilt.

13. Sicherheitssystem für ein elektromechanisches Schwungrad gemäß Anspruch 12, ferner umfassend:
eine durch die Zentren der Gehäusedeckel verlaufende Deckelmittellinie;
ein Winkelversatz zwischen der ersten und zweiten Durchführung;
wobei der Versatz dazu dient, den Abstand zwischen der ersten und zweiten Durchführung zu vergrößern;
wobei der Versatz dazu dient, die Statorleitungskupplung und benachbarte Abschnitte der Statorleitung und der Kupplungsleitung in Bezug auf eine Linie, die parallel zur Deckelmittellinie verläuft, in einem Winkel auszurichten; und
im Vergleich mit keinem Winkelversatz dient der Versatz dazu, die relative Drehung der Innen- und Außengehäuse zu reduzieren, die erforderlich sind, um die trennbare Statorleitungskupplung zu teilen.

14. Sicherheitssystem für ein elektromechanisches Schwungrad gemäß Anspruch 12 oder 13, ferner umfassend:
eine Vielzahl von Statorleitungskupplungen und entsprechenden Stator- und Kupplungsleitungen;
alle Statorleitungen verlaufen durch die erste Durchführung;
alle Kupplungsleitungen verlaufen durch die zweite Durchführung;
jede Stator- und Kupplungsleitungskombination weist eine Länge auf, die sich von der Länge der anderen einen oder mehreren Stator- und Kupplungsleitungskombinationen unterscheidet; und,
die unterschiedlichen Längen dienen dazu, als Reaktion auf die relative Drehung der Innen- und Außendeckel eine gestaffelte Folge von Statorleitungskupplungstrennungen bereitzustellen.

15. Sicherheitssystem für ein elektromechanisches Schwungrad gemäß den Ansprüchen 12 bis 14, ferner umfassend:
jeweils voneinander beabstandete Deckel der Innen- und Außengehäuse;
eine erste Durchführung (1162) im Innengehäusedeckel (1016) und eine zweite Durchführung (1166) im Außengehäusedeckel (1012);
eine sich durch die erste und zweite Durchführung erstreckende Statorleitung (1160); und
eine Schneidvorrichtung (1200A), die dafür ausgelegt ist, die Statorleitung zu trennen, wenn sich die Statorleitung während eines Schwungrad-Ausfallereignisses relativ zu einem Gehäusedeckel bewegt.

## Revendications

1. Un système de sécurité du volant moteur électromécanique comprenant :
des enceintes internes et externes ;
une masse de volant moteur (357) ;
l'enceinte interne (328 ; 1006) enveloppant la masse du volant moteur ;
l'enceinte externe (338 ; 1002) enveloppant l'enceinte interne ;
au moins une première partie (356) de la masse de volant moteur conçue pour tomber en panne à une première vitesse de rotation de masse du volant moteur ;
**caractérisé par** :
au moins une seconde partie (354) de la masse du volant moteur conçue pour tomber en panne à une seconde vitesse de rotation de la masse du volant moteur ; et,
la première vitesse de rotation de la masse du volant moteur étant inférieure à la seconde vitesse de rotation de la masse du volant moteur, de sorte que dans un événement de défaillance de survitesse de la masse du volant moteur, la première partie de la masse du volant moteur tombe en panne avant que la seconde partie de la masse du volant moteur ne tombe en panne.

2. Le système de sécurité du volant moteur électromécanique selon la revendication 1, dans lequel une conception d'enceinte interne agissant pour résister à une brèche résultant d'une défaillance de la première partie de la masse de volant moteur est également opérationnelle pour résister à une brèche au cas où la seconde partie de la masse de volant moteur tombe en panne par la suite.

3. Le système de sécurité du volant moteur électromécanique selon la revendication 1 ou 2, comprenant en outre :
un axe de rotation de la masse du volant moteur (x-x) dans lequel, par rapport à l'axe, la première partie est une couche externe et la seconde partie est une couche interne.

4. Le système de sécurité du volant moteur électromécanique selon l'une quelconque des revendications précédentes, dans lequel la seconde partie de la masse de volant moteur est conçue pour stocker une quantité d'énergie cinétique qui est sensiblement égale à la quantité d'énergie cinétique stockée par la première partie.

5. Le système de sécurité du volant moteur électromécanique selon l'une quelconque des revendications précédentes, dans lequel la seconde partie est entourée à sa circonférence par une première partie.

6. Le système de sécurité du volant moteur électromécanique selon l'une quelconque des revendications précédentes, comprenant en outre :
un palier de type pivot (1030) entre les enveloppes interne (1004) et externe (1004) ; et,
une ligne centrale de rotation de la masse du volant moteur traversant le palier de pivotement.

7. Le système de sécurité du volant moteur électromécanique selon la revendication 6 comprenant en outre ;
un ou plusieurs paliers élastiques (1020, 1022) dans un anneau défini par les enceintes internes et externes ;
les paliers élastiques espacés du palier de pivotement ; et,
les paliers choisis pour limiter les transferts de mouvement entre la première et la seconde enceinte.

8. Le système de sécurité du volant moteur électromécanique selon la revendication 7, dans lequel au moins l'un des paliers incorpore un matériau visco-élastique.

9. Le système de sécurité du volant moteur électromécanique de l'une quelconque des revendications précédentes, comprenant en outre :
une enceinte à vide dans l'enceinte interne ;
l'enceinte interne étant une enceinte à pression primaire métallique conçue pour contenir les produits d'une défaillance de survitesse de la masse du volant moteur ; et,
l'enceinte à vide étant une enceinte métallique et ayant une paroi relativement mince par rapport à l'épaisseur d'une paroi à enceinte de pression primaire.

10. Le système de sécurité du volant moteur électromécanique selon l'une quelconque des revendications précédentes comprenant en outre :
une enceinte à vide métallique dans l'enceinte interne ; et,
l'enceinte interne comprenant une paroi latérale en composite de fibres de carbone entourant l'enceinte à vide.

11. Le système de sécurité du volant moteur électromécanique selon l'une quelconque des revendications précédentes comprenant en outre :
une enceinte à vide métallique dans l'enceinte interne ;
un bloc d'échange d'énergie comprenant
un ensemble noyau (312) comprenant un stator de moteur-générateur (320) ayant plusieurs conducteurs électriques de stator et un support de stator (322) et un ensemble de filage (310) comprenant un rotor de moteur-générateur (314) et la masse de volant moteur (316) ; et,
le rotor du moteur-générateur encerclant le stator du moteur-générateur.

12. Le système de sécurité du volant moteur électromécanique selon l'une quelconque des revendications précédentes comprenant en outre :
des couvercles séparés espacés respectifs pour les enceintes internes et externes ;
une première traversée à travers (1162) le couvercle de l'enceinte interne (1016) et une seconde traversée à travers (1166) le couvercle de l'enceinte externe (1012) ;
un couplage de conducteur de stator séparable (1103) situé entre les couvercles d'enceinte ;
le couplage de conducteur de stator fournissant un trajet de courant électrique entre un conducteur électrique de stator (1160) et un conducteur de couplage (1168) ;
le conducteur du stator s'étendant entre un enroulement du stator et le couplage du conducteur du stator ;
le conducteur du stator traversant la première traversée ;
le conducteur de couplage s'étendant entre le couplage du conducteur du stator et un emplacement à l'extérieur de l'enceinte externe ;
le conducteur de couplage passant à travers la seconde traversée ; et, une rotation relative des couvercles internes et externes servant à séparer le couplage de conducteur de stator séparable.

13. Le système de sécurité du volant moteur électromécanique selon la revendication 12 comprenant en outre :
une ligne centrale du couvercle passant par les centres des couvercles de l'enceinte ;
un décalage angulaire entre les première et seconde traversées ;
le décalage servant à étendre la distance entre les première et seconde traversées ;
le décalage servant à orienter le couplage du conducteur du stator et les parties adjacentes du conducteur du stator et du conducteur de couplage selon un angle par rapport à une ligne parallèle à la ligne centrale du couvercle ; et
comparé à aucun décalage angulaire, le décalage servant à réduire la rotation relative des enceintes internes et externes nécessaires pour séparer le couplage de conducteur de stator séparable.

14. Le système de sécurité du volant moteur électromécanique selon les revendications 12 ou 13 comprenant en outre :
une pluralité de couplages de conducteur de stator et des conducteurs de stator respectifs et des conducteurs de couplage ;
chacun des conducteurs du stator passant à travers la première traversée ;
chacun des conducteurs de couplage passant à travers la seconde traversée ;
chaque combinaison de conducteur de stator et de conducteur de couplage ayant une longueur différente de l'autre ou plusieurs autres combinaisons de conducteurs de stator et de conducteurs de couplage ; et,
les différentes longueurs servant à fournir une séquence décalée de séparations de couplage de conducteur de stator en réponse à la rotation relative des couvercles intérieurs et extérieurs.

15. Le système de sécurité du volant moteur électromécanique selon les revendications 12 à 14 comprenant en outre :
les couvercles séparés espacés respectifs des enceintes internes et externes ;
une première traversée à travers (1162) le couvercle de l'enceinte interne (1016) et une seconde traversée à travers (1166) le couvercle de l'enceinte externe (1012) ;
un conducteur de stator (1160) s'étendant à travers les première et seconde traversées ; et,
une lame (1200A) configurée pour couper le conducteur du stator lorsque le conducteur du stator se déplace par rapport à un couvercle de l'enceinte pendant la défaillance du volant moteur.
